# EUROPEAN PATENT APPLICATION

(11) **EP 4 738 058 A1**
(43) Date of publication of application: **06.05.2026**
(21) Application number: 25730891.6
(22) Date of filing: 10.06.2025
(51) Int. Cl.: G06F 1/16, G09F 9/30

(54) **FLEXIBLE DISPLAY INCLUDING SHAPE MEMORY FILM AND ELECTRONIC DEVICE INCLUDING SAME**

(30) Priority: 10.09.2024 KR 20240123574; 08.10.2024 KR 20240137173
(71) Applicant: SAMSUNG ELECTRONICS CO., LTD., Yeongtong-gu Suwon-si, Gyeonggi-do 16677 (KR)
(72) Inventor: YOON, Shinhyuk, Suwon-si, Gyeonggi-do 16677 (KR); KANG, Daewon, Suwon-si, Gyeonggi-do 16677 (KR); KIM, Byoungjun, Suwon-si, Gyeonggi-do 16677 (KR); LEE, Eunbi, Suwon-si, Gyeonggi-do 16677 (KR); LEE, Junghyun, Suwon-si, Gyeonggi-do 16677 (KR); CHUN, Jinwook, Suwon-si, Gyeonggi-do 16677 (KR); HONG, Hyunchul, Suwon-si, Gyeonggi-do 16677 (KR)
(74) Representative: HGF
(86) International application number: PCT/KR2025/007916
(87) International publication number: WO 2026/059036

(57) **Abstract**

An electronic device includes a housing including a first housing part and a second housing part, and a flexible display. The flexible display includes a display panel, a support plate including a bendable portion including a plurality of holes and a conductive portion formed from a thermally conductive material, and a film disposed between the display panel and the support plate. The film is formed from a shape-memory material that is restored based on a temperature of the film reaching a glass transition temperature. The film is provided heat through a thermally conductive material of the support plate to reach the glass transition temperature.

## Description

### [Technical Field]

The present disclosure relates to an electronic device including a flexible display including a shape memory film.

### [Background Art]

An electronic device may include housing parts movably coupled and a flexible display. As the housing parts rotate, a portion of the flexible display may be bent. The electronic device may include a hinge assembly rotatably connecting the housing parts. A portion of the flexible display may be folded or unfolded according to a folding movement and an unfolding movement.

The above-described information may be provided as a related art for the purpose of helping to understand the present disclosure. No claim or determination is raised as to whether any of the above-described information may be applied as a prior art related to the present disclosure.

### [Disclosure]

### [Technical Solution]

An electronic device is disclosed. The electronic device may comprise a housing including a first housing part and a second housing part movably coupled to the first housing part. The electronic device may comprise a flexible display disposed on a front side of the first housing part and the second housing part. The flexible display may include a display panel. The flexible display may include a support plate including a bendable portion including a conductive portion formed from a plurality of holes and a thermally conductive material. The support plate may support the display panel. The flexible display may include a film disposed between the display panel and the support plate. The film may be formed from a shape-memory material that is restored based on a temperature of the film reaching a glass transition temperature. The film may receive heat via the thermally conductive material of the support plate to reach the glass transition temperature.

A flexible display module is disclosed. The flexible display module may include a display panel including a transparent cover. The flexible display module may include a substrate that includes a bendable portion and a rigid portion and supports at least a portion of the display panel. The bendable portion may include a plurality of holes. The flexible display module may include a shape-memory film disposed between the display panel and the substrate.

A foldable electronic device is disclosed. The foldable electronic device may include a foldable housing including a first housing part and a second housing part rotatably coupled to the first housing part. The foldable electronic device may include a flexible display. The flexible display may include a display panel including a transparent cover, a support plate supporting the display panel and including a bendable port including a plurality of holes and a conductive portion, and a film, disposed between the display panel and the support plate, formed from a shape-memory material. The film may be configured to provide tensile force in a direction of unfolding the display panel to reduce a crease of the display panel by a shape of the film being restored based on a temperature of the film reaching a glass transition temperature. The film may be provided with heat via the conductive portion to reach the glass transition temperature.

A flexible display module is disclosed. The flexible display module may include a display panel including a transparent cover. The flexible display module may include a bendable portion including a plurality of holes and a conductive portion, and a support plate supporting at least a portion of the display panel. The flexible display module may include a shape-memory film formed from a shape-memory material and disposed between the display panel and the support plate. The shape-memory film may be configured to provide tensile force in a direction of unfolding the display panel to reduce a crease of the display panel by a shape of the shape-memory film being restored based on a temperature of the shape-memory film reaching a glass transition temperature. The shape-memory film may be provided with heat through the conductive portion to reach the glass transition temperature.

### [Description of the Drawings]

FIG. 1 is a block diagram of an electronic device within a network environment according to an embodiment.
FIG. 2A illustrates an example of an unfolded state of an electronic device according to an embodiment.
FIG. 2B illustrates an example of a folded state of an electronic device according to an embodiment.
FIG. 2C is an exploded view of an electronic device according to an embodiment.
FIG. 3 is an exploded perspective view of a flexible display of a foldable electronic device according to an embodiment.
FIG. 4 is a cross-sectional view of a flexible display cut along line A-A' of FIG. 2C, according to an embodiment.
FIG. 5 illustrates a portion of a foldable electronic device.
FIG. 6 illustrates a portion of an exemplary first support plate.
FIG. 7 is a graph illustrating a temperature change in a partial region according to an operation of an electronic component.
FIG. 8 is a block diagram of a foldable electronic device according to an embodiment.
FIG. 9 illustrates a portion of an exemplary first support plate.
FIG. 10 is a block diagram of a foldable electronic device according to an embodiment.
FIG. 11 illustrates a portion of an exemplary first support plate.
FIG. 12 is an exploded perspective view of a first support plate.
FIG. 13 illustrates a foldable electronic device including a vapor chamber, according to an embodiment.
FIG. 14 illustrates an interior of a foldable electronic device, according to an embodiment.
FIG. 15 illustrates an example of a shape-memory film.
FIG. 16 illustrates a visual object provided by a foldable electronic device according to an embodiment.
FIG. 17A illustrates an example of a first state of an electronic device.
FIG. 17B illustrates an example of a second state of an electronic device.
FIG. 17C illustrates an example of a third state of an electronic device.
FIG. 18A is a plan view of an electronic device from which the flexible display is removed.
FIG. 18B is a rear view of an electronic device from which a rear cover and a display are removed.
FIG. 19 is an exploded perspective view of a flexible display of a foldable electronic device according to an embodiment.
FIGS. 20, 21, 22, and 23 illustrate examples of a shape-memory film.
FIG. 24 illustrates a visual object provided by a foldable electronic device according to an embodiment.

### [Mode for Invention]

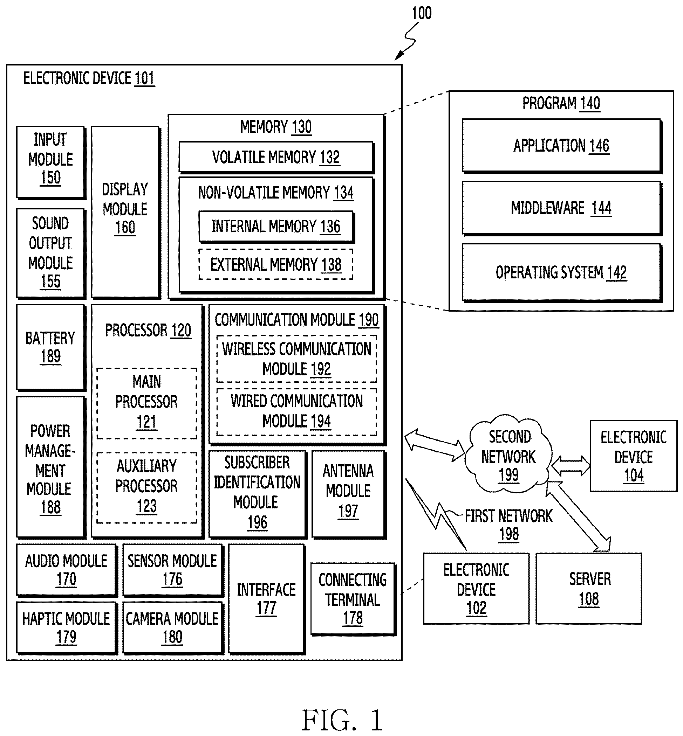

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

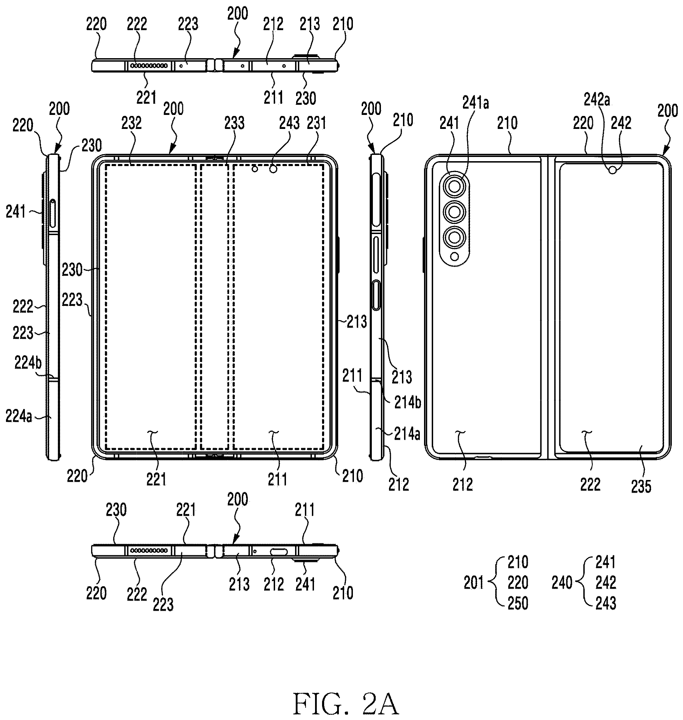

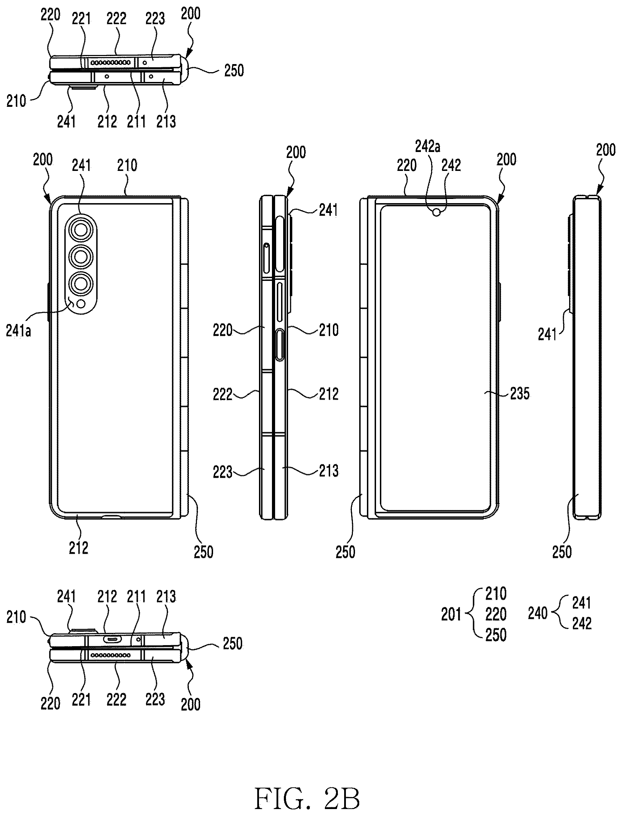

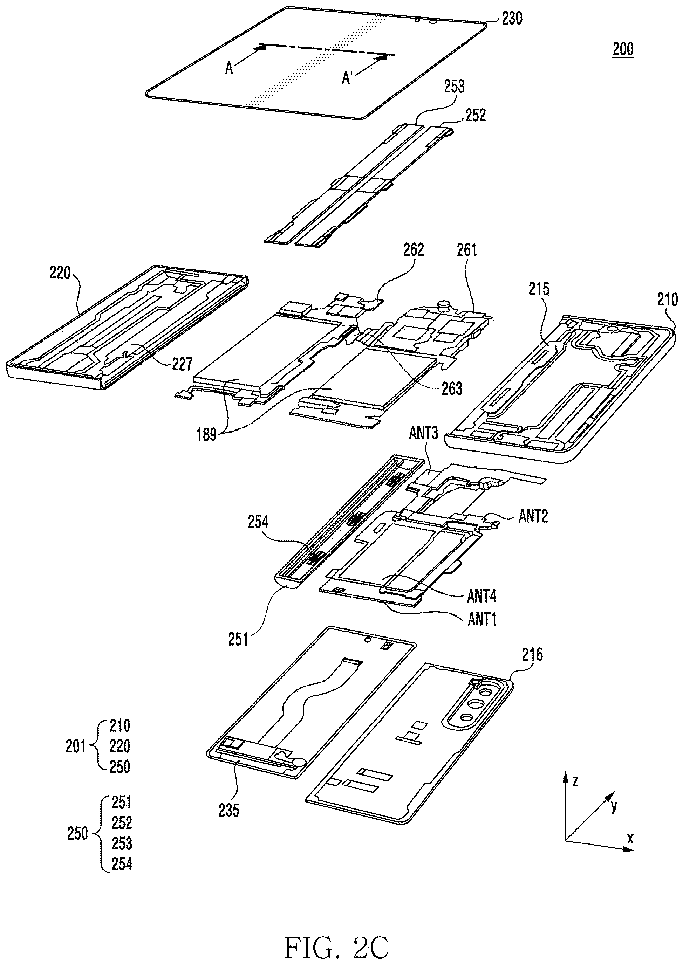

FIG. 2A illustrates an example of an unfolded state of an electronic device according to an embodiment. FIG. 2B illustrates an example of a folded state of an electronic device according to an embodiment. FIG. 2C is an exploded view of an electronic device according to an embodiment.

The electronic device 101 of FIG. 1 may include a foldable electronic device 200. Referring to FIGS. 2A, 2B, and 2C, the foldable electronic device 200 according to an embodiment may include a foldable housing 201, a flexible display 230, one or more cameras 240, and a hinge assembly 250.

According to an embodiment, the foldable housing 201 may define an exterior surface of the foldable electronic device 200. For example, the foldable housing 201, which is a physical exterior surface of the foldable electronic device 200 exposed to the outside, may accommodate components disposed inside the foldable electronic device 200. At least a portion of the components for implementing a function of the foldable electronic device 200 may be disposed in the foldable housing 201. According to an embodiment, the foldable housing 201 may include a first housing part 210 and a second housing part 220.

According to an embodiment, the first housing part 210 may include a first surface 211, a second surface 212 opposite the first surface 211, and a first side exterior surface 213 at least partially covering a periphery of the first surface 211 and a periphery of the second surface 212. For example, the first surface 211 may be referred to as a front exterior surface of the first housing part 210, and the second surface 212 may be referred to as a rear exterior surface of the first housing part 210. The first side exterior surface 213 may be connected to the periphery of the first surface 211 and the periphery of the second surface 212. The first surface 211, the second surface 212, and the first side exterior surface 213 may form an inner space of the first housing part 210. For example, at least one component may be disposed within a space covered by the first surface 211, the second surface 212, and the first side exterior surface 213.

According to an embodiment, the second housing part 220 may include a third surface 221, a fourth surface 222 opposite the third surface 221, and a second side exterior surface 223 at least partially covering a periphery of the third surface 221 and a periphery of the fourth surface 222. For example, the third surface 221 may be referred to as a front exterior surface of the second housing part 220, and the fourth surface 222 may be referred to as a rear exterior surface of the second housing part 220. The second side exterior surface 223 may be connected to the periphery of the third surface 221 and the periphery of the fourth surface 222. The third surface 221, the fourth surface 222, and the second side exterior surface 223 may form an inner space of the second housing part 220. For example, at least one component may be disposed within a space covered by the third surface 221, the fourth surface 222, and the second side exterior surface 223.

According to an embodiment, the flexible display 230 may be configured to display visual information. For example, the flexible display 230 may include a display region including a plurality of pixels. For example, an active region may be referred to as an active region displaying visual information.

According to an embodiment, the flexible display 230 may include a first portion 231, a second portion 232, and a third portion 233 disposed between the first portion 231 and the second portion 232. The foldable electronic device 200 may further include a cover display 235 distinguished from the flexible display 230. The cover display 235 may be referred to as a sub-display.

According to an embodiment, the first portion 231 may be supported by the first housing part 210. The second portion 232 may be supported by the second housing part 220. The first portion 231 and the second portion 232 may be substantially flat, independently of a state of the foldable electronic device 200. The third portion 233 may be configured to be bent based on a rotation of the first housing part 210 or the second housing part 220. For example, in an unfolded state that the first housing part 210 and the second housing part 220 are unfolded, the third portion 233 may be substantially flat. In a folded state or an intermediate state that the first housing part 210 and the second housing part 220 are folded, the third portion 233 may be at least partially bent. The flexible display 230 may be a flexible display including a bendable third portion 233.

According to an embodiment, the one or more cameras 240 may be configured to obtain an image, based on receiving light from a subject outside the foldable electronic device 200. For example, the one or more cameras 240 may include first cameras 241, a second camera 242, and/or a third camera 243. For example, the first cameras 241 may be disposed in the first housing part 210. For example, the first housing part 210 may include at least one opening 241a overlapping the first cameras 241 when the foldable electronic device 200 is viewed from above. The first cameras 241 may obtain an image based on receiving light from the outside of the foldable electronic device 200 through the at least one opening 241a.

According to an embodiment, the second camera 242 may be disposed in the second housing part 220. The second housing part 220 may include at least one opening 242a overlapping the second camera 242 when the foldable electronic device 200 is viewed from above. The second camera 242 may obtain an image based on receiving light from the outside of the foldable electronic device 200 through the at least one opening 242a.

According to an embodiment, the third camera 243 may be disposed in the first housing part 210. For example, the first portion 231 of the flexible display 230 may include at least one opening overlapping the third camera 243 when the flexible display 230 is viewed from above. The third camera 243 may obtain an image based on receiving light from the outside of the flexible display 230 through the at least one opening.

According to an embodiment, the second camera 242 and the third camera 243 may be disposed below (e.g., in the -z direction) the flexible display 230 or the cover display 235. For example, the second camera 242 and/or the third camera 243 may include an under display camera (UDC) and/or a punch hole camera.

According to an embodiment, the first housing part 210 and the second housing part 220 may be rotatably coupled. For example, the second housing part 220 may be rotatably coupled to the first housing part 210 via the hinge assembly 250.

According to an embodiment, the hinge assembly 250 may rotatably connect the first housing part 210 and the second housing part 220. The hinge assembly 250 may be disposed between the first housing part 210 and the second housing part 220 of the foldable electronic device 200 so that the foldable electronic device 200 may be folded. The hinge assembly 250 may enable the foldable electronic device 200 to change from the unfolded state to the folded state. The hinge assembly 250 may enable the foldable electronic device 200 to change from the folded state to the unfolded state. For example, the hinge assembly 250 may maintain the foldable electronic device 200 in an intermediate state between the unfolded state and the folded state.

According to an embodiment, the unfolded state may be referred to as a state in which a first direction toward which the first portion 231 faces and a second direction toward which the second portion 232 faces are substantially the same. The folded state may be referred to as a state in which the first direction is substantially opposite to the second direction. When the foldable electronic device 200 is in the folded state, the first housing part 210 and the second housing part 220 may be stacked or overlapped.

According to an embodiment, when the foldable electronic device 200 is in the folded state and the intermediate state, the first direction and the second direction may be different from each other. For example, when the foldable electronic device 200 is in the folded state, the first direction and the second direction may be opposite to each other. For example, when the foldable electronic device 200 is in the intermediate state, the first direction may form an angle with respect to the second direction.

For example, the foldable electronic device 200 may include at least one conductive portion 214a or 224a and at least one non-conductive portion 214b or 224b included in the first side surface 213 and/or the third side surface 223. For example, at least one conductive portion 214a or 224a may be separated from another conductive portions in the first side surface 213 and/or the third side surface 223 by contacting the at least one non-conductive portion 214b or 224b. In an embodiment, at least one conductive portion 214a or 224a may operate as an antenna radiator for communicating with an external electronic device.

Referring to FIG. 2C, the hinge assembly 250 may include a hinge cover 251, a first hinge plate 252, a second hinge plate 253, and a plurality of hinge modules 254. The hinge cover 251 may at least partially surround components of the hinge assembly 250 and form an outer surface of the hinge assembly 250. When the foldable electronic device 200 is in the folded state, the hinge cover 251 may at least partially be exposed to the outside of the foldable electronic device 200 through a space between the first housing part 210 and the second housing part 220. When the foldable electronic device 200 is in the unfolded state, the hinge cover 251 may be covered by the first housing part 210 and the second housing part 220 and may not be exposed to the outside of the foldable electronic device 200.

According to an embodiment, the first hinge plate 252 and the second hinge plate 253 may be operably coupled with the first housing part 210 and the second housing part 220, respectively, thereby rotatably connecting the first housing part 210 and the second housing part 220. For example, the first hinge plate 252 may be coupled with a first bracket 215 of the first housing part 210, and the second hinge plate 253 may be coupled with a second bracket 227 of the second housing part 220. As the first hinge plate 252 and the second hinge plate 253 are operably coupled to the first bracket 215 and the second bracket 227, respectively, the first housing part 210 and the second housing part 220 may be rotatable according to a rotation of the first hinge plate 252 and the second hinge plate 253.

According to an embodiment, the plurality of hinge modules 254 may rotate the first hinge plate 252 and the second hinge plate 253. For example, the plurality of hinge modules 254 may include gears that are engageable with each other and rotatable. The first hinge plate 252 and the second hinge plate 253 may rotate based on a rotational motion of the gears of the plurality of hinge modules 254.

According to an embodiment, the first housing part 210 may include a first bracket 215 and a rear cover 216. The first bracket 215 may be disposed inside the first housing part 210 and may support at least one component disposed within the first housing part 210. The rear cover 216 may at least partially form the second surface 212 of the first housing part 210. For example, the second housing part 220 may include the second bracket 227. The second bracket 227 may be disposed inside the second housing part 220 and may support at least one component disposed within the second housing part 220. For example, the cover display 235 may be disposed below (e.g., in the -z direction) the second bracket 227. According to an embodiment, a flexible display (e.g., the flexible display 230 of FIG. 2A) may define a front side of the foldable electronic device 200, and the rear cover 216 opposite to the flexible display may define a rear side of the foldable electronic device 200.

According to an embodiment, the foldable electronic device 200 may include a plurality of electronic components for implementing various functions in addition to the one or more cameras 240 described above. For example, the foldable electronic device 200 may include a first printed circuit board 261, a second printed circuit board 262, a flexible printed circuit board 263, and/or a battery 189. The above-described electronic components are only exemplary and are not limited thereto.

For example, the first printed circuit board 261 and the second printed circuit board 262 may provide electrical connections between components within the foldable electronic device 200, respectively. For example, the first printed circuit board 261 may be disposed within the first housing part 210, and the second printed circuit board 262 may be disposed within the second housing part 220. The first printed circuit board 261 may provide electrical connections between electronic components disposed within the first housing part 210. The second printed circuit board 262 may provide electrical connections between electronic components disposed within the second housing part 220. The flexible printed circuit board 263 may electrically connect the first printed circuit board 261 and the second printed circuit board 262. For example, the flexible printed circuit board 263 may extend from the first printed circuit board 261 across the hinge assembly 250 to the second printed circuit board 262. For example, the flexible printed circuit board 263 may at least partially overlap the hinge assembly 250.

According to an embodiment, the battery 189, which is a device for supplying power to at least one component of the foldable electronic device 200, may include, for example, a non-rechargeable primary battery and/or a rechargeable secondary battery.

According to an embodiment, the foldable electronic device 200 may include a plurality of antennas ANT1, ANT2, ANT3, or ANT4 to be used for communication with an external electronic device. For example, the foldable electronic device 200 may include a main antenna ANT1, a sub antenna ANT2, an ultra-wide band (UWB) antenna ANT3, and/or an antenna for short-range wireless communication ANT4. However, it is not limited thereto. For example, the main antenna ANT1 may include one or more conductive portions forming at least a portion of the first housing part 210 or the second housing part 220. For example, the main antenna ANT1 may include a plurality of conductive portions forming a periphery portion of the first housing part 210. For example, the main antenna ANT1 may further include conductive portions forming an upper periphery or a side periphery of the first housing part 210. The main antenna ANT1 may be configured to transmit and/or receive signals in various frequency bands, through each of the plurality of conductive portions or a combination of the plurality of conductive portions.

It is described that the second housing part 220 is rotatably coupled to the first housing part 210, but a relative movement of the first housing part 210 and the second housing part 220 is not limited to rotation. For example, the second housing part 220 may be slidably coupled to the first housing part 210. In this case, the flexible display 230 may provide a display region whose size is variable by being inserted into the first housing part 210 (and/or the second housing part 220) or extracted to the outside of the first housing part 210 (and/or the second housing part 220) according to the sliding of the housing parts 210 and 220. In this respect, the electronic device 200 may be referred to as a slidable electronic device 200, and the flexible display 230 may be referred to as a rollable display.

Hereinafter, one or more components described below with reference to the drawings may be implemented in conjunction with the components of the foldable electronic device 200 described with reference to FIGS. 2A, 2B, and 2C. The same reference numerals may be assigned to components that are identical to the above-described components, and redundant descriptions may be omitted. In the present disclosure, terms indicating positions such as 'above' and 'below' may be used to describe relative positions between components, and do not define an absolute position relationship. For example, if the foldable electronic device 200 illustrated in the drawings is flipped over, 'above' and 'below' may be swapped with each other.

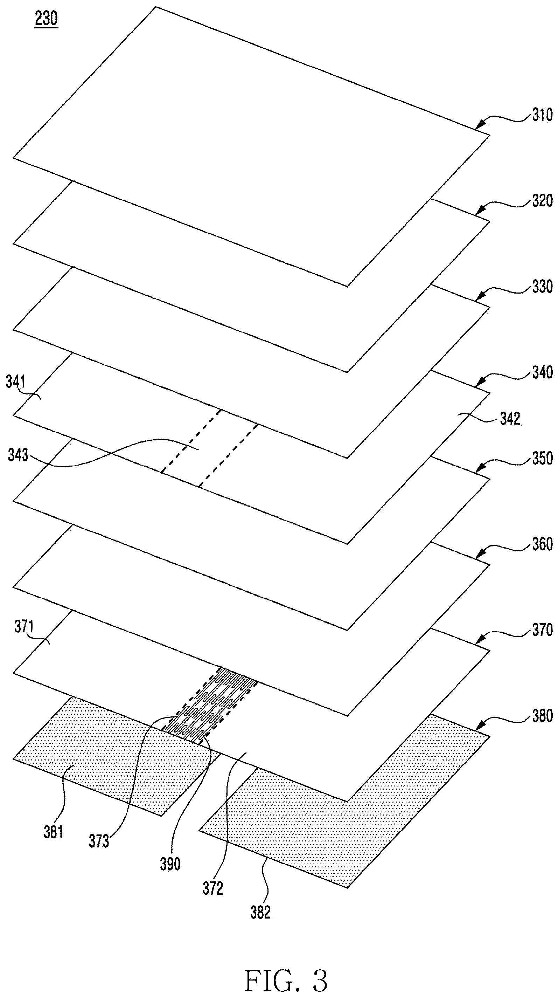

FIG. 3 is an exploded perspective view of a flexible display of a foldable electronic device according to an embodiment.

Referring to FIG. 3, the flexible display 230 may include a plurality of layers. The flexible display 230 may be formed by the plurality of layers being stacked with each other. According to an embodiment, the flexible display 230 may include a first protective film 310, a protective layer 320, a transparent cover 330, a display panel 340, a second protective film 350, a shape-memory film 360, a first support plate 370, and/or a second support plate 380. As illustrated in FIG. 3, the first protective film 310, the protective layer 320, the transparent cover 330, the display panel 340, the second protective film 350, the shape-memory film 360, the first support plate 370, and the second support plate 380 may be sequentially stacked to form the flexible display 230. However, the flexible display 230 illustrated in FIG. 3 is only exemplary, and the embodiments of the present disclosure are not limited thereto. For example, a portion of the components of the flexible display 230 described above may be omitted, or another component may be added. The flexible display 230 may be provided in a module form (e.g., a flexible display module) including the plurality of layers.

According to an embodiment, the flexible display 230 may include the first protective film 310 forming an uppermost layer exposed to the outside. Since the first protective film 310 is positioned above the display panel 340 displaying visual information (e.g., in the +z direction), the first protective film 310 may be formed from a substantially transparent material so that the visual information may be recognized.

According to an embodiment, the flexible display 230 may include the protective layer 320. The protective layer 320 may be disposed below the first protective film 310 (e.g., in the -z direction). The protective layer 320 may be configured to protect the display panel 340 together with the first protective film 310. The protective layer 320 may be configured to be at least partially deformable together with the first protective film 310.

According to an embodiment, the flexible display 230 may include the display panel 340 including the transparent cover 330. The transparent cover 330 may be disposed below the first protective film 310. For example, the transparent cover 330 may include a glass layer. For example, the glass layer may be a substantially transparent thin film layer. For example, the transparent cover 330 may include at least one of polyimide (PI) or ultra-thin glass (UTG), but is not limited thereto. Although not illustrated, the display panel 340 may also include a polarizing plate.

According to an embodiment, the display panel 340 may be configured to display visual information. For example, the display panel 340 may include pixels for displaying visual information and sub-pixels included within each pixel of the pixels. The display panel 340 may be configured to output an image and/or text by using the pixels and sub-pixels. The display panel 340 may be electrically connected to display driving circuitry configured to control the flexible display 230.

According to an embodiment, the display panel 340 may include a first portion 341, a second portion 342, and/or a third portion 343. For example, the first portion 341 may be a portion of the display panel 340 that is supported by a first housing part (e.g., the first housing part 210 of FIG. 2A). The second portion 342 may be a portion of the display panel 340 that is supported by a second housing part (e.g., the second housing part 220 of FIG. 2A). The first portion 341 of the display panel 340 and the second portion 342 of the display panel 340 may maintain a substantially flat shape. For example, regardless of a state (e.g., folded state, unfolded state, or intermediate state) of a foldable electronic device (e.g., the foldable electronic device 200 of FIG. 2A), the first portion 341 and the second portion 342 may maintain a substantially flat shape.

According to an embodiment, the display panel 340 may include a third portion 343 disposed between the first portion 341 and the second portion 342. The third portion 343 of the display panel 340 may be flat or may be at least partially bent, according to a state of the foldable electronic device 200.

For example, in the unfolded state of the foldable electronic device 200, the first housing part 210 and the second housing part 220 may be disposed on substantially the same plane. In the unfolded state of the foldable electronic device 200, the first portion 341 of the display panel 340 supported by the first housing part 210 and the second portion 342 of the display panel 340 supported by the second housing part 220 may be disposed on substantially the same plane. The third portion 343 of the display panel 340, which is disposed between the first portion 341 of the display panel 340 and the second portion 342 of the display panel 340, may be substantially flat in the unfolded state of the foldable electronic device 200.

For example, in the folded state of the foldable electronic device 200, the first housing part 210 and the second housing part 220 may be stacked. In the folded state of the foldable electronic device 200, the first portion 341 of the display panel 340 supported by the first housing part 210 may be substantially opposite to the second portion 342 of the display panel 340 supported by the second housing part 220. The third portion 343 of the display panel 340, which is disposed between the first portion 341 of the display panel 340 and the second portion 342 of the display panel 340, may be bent in the folded state of the foldable electronic device 200.

According to an embodiment, the flexible display 230 may include the second protective film 350 attached under the display panel 340. The second protective film 350 may be configured to protect and support the display panel 340 on the rear surface of the display panel 340. For example, the second protective film 350 may protect the display panel 340 from impact and reduce the generation of static electricity.

According to an embodiment, the first support plate 370 may be configured to support the display panel 340 under the display panel 340. The first support plate 370 may have a shape corresponding to the display panel 340. For example, the first support plate 370 may include a first support portion 371 corresponding to the first portion 341 of the display panel 340, a second support portion 372 corresponding to the second portion 342 of the display panel 340, and a bendable portion 373 corresponding to the third portion 343 of the display panel 340. For example, the first support portion 371 and the second support portion 372 may be relatively rigid. The first support portion 371, disposed below the first portion 341 of the display panel 340, may support the first portion 341 of the display panel 340. The second support portion 372, disposed below the second portion 342 of the display panel 340, may support the second portion 342 of the display panel 340.

According to an embodiment, the bendable portion 373 of the first support plate 370 may include a plurality of holes 390. Since the plurality of holes 390 corresponds to the third portion 343 of the display panel 340, the plurality of holes 390 may enable the bendable portion 373 to be bent more easily according to the bending of the third portion 343 of the display panel 340. The plurality of holes 390 may provide flexibility to the bendable portion 373 of the first support plate 370. For example, when the state of the foldable electronic device 200 is changed from the unfolded state to the folded state, a width of the plurality of holes 390 may increase by tensile force, so the bendable portion 373 of the first support plate 370 may be bent. The plurality of holes 390 may be referred to as a plurality of slits. The first support plate 370 may be referred to as a lattice structure or a lattice plate in terms of including the plurality of holes 390.

According to an embodiment, the flexible display 230 may include a second support plate 380. The second support plate 380 may support the display panel 340 together with the first support plate 370. Unlike the first support plate 370, which has a shape corresponding to a shape of the display panel 340 by including the bendable portion 373, the second support plate 380 may include a first part 381 corresponding to the first portion 341 of the display panel 340, and a second part 382 spaced from the support portion and corresponding to the second portion 342 of the display panel 340.

According to an embodiment, the third portion 343 of the display panel 340 may be configured to be bent by a rotation of the first housing part 210 and/or a rotation of the second housing part 220. When the third portion 343 is repeatedly bent and unfolded, stress may be applied to a portion of the third portion 343. The stress may cause plastic deformation of the bending portion, thereby forming a crease in the display panel 340. When the crease is formed in the display panel 340, the crease may be recognized by a user, thereby deteriorating visibility of the flexible display 230.

According to an embodiment, the foldable electronic device 200 may include a film 360 formed from a shape-memory material to reduce the crease formed within the display panel 340. The film 360 may be referred to as a shape-memory film. The shape-memory film 360 may be disposed below the display panel 340. For example, the shape-memory film 360 may be disposed between the display panel 340 and the first support plate 370. The shape-memory film 360 may be configured to have a restored shape at a critical temperature (e.g., glass transition temperature). A deformation of the shape-memory film 360 due to repeated folding and unfolding of the foldable electronic device 200 may be corrected by the restoration of the shape-memory film 360 at the critical temperature. For example, when a temperature of the shape-memory film 360 is increased to reach the glass transition temperature, the shape-memory film 360 may be restored to a flat original shape. As the shape-memory film 360 is restored to a flat shape, the shape-memory film 360 may be configured to provide tensile force to the display panel 340 in a direction of unfolding the display panel 340. The tensile force in the direction of unfolding the display panel 340 may reduce the crease formed in the display panel 340. The tensile force provided from the shape-memory film 360 may be applied not only to the display panel 340, but also to the transparent cover 330, the protective layer 320, and the first protective film 310, which are disposed above the display panel 340. The shape-memory film 360 may reduce creases formed in the transparent cover 330, the protective layer 320, and the first protective film 310.

The shape-memory film 360 may be restored to its original shape through dynamic van der Waals interactions at the glass transition temperature. The shape-memory material forming the shape-memory film 360 may include, for example, an acrylic-based material, a polyurethane-based material, or an α-olefin-based material, but is not limited thereto.

For example, the plurality of layers of the flexible display 230 may have different modulus values, respectively. Since the material, thickness, and folded shape of each of the plurality of layers are different, the force required to fold each of the plurality of layers may be different. Adhesive layers between the plurality of layers may be tuned to suit the modulus of each layer of the plurality of layers so that the shape-memory film 360 may provide tensile force suitable for each of the plurality of layers. For example, a first modulus value of the display panel 340 may be greater than a second modulus value of a layer including polyimide (PI) (e.g., the second protective film 350). The second modulus value may be greater than a third modulus value of a layer including polyethylene terephthalate (PET) (e.g., the protective layer 320). The third modulus value may be greater than a modulus value of the shape-memory film 360. However, the embodiments of the present disclosure are not limited thereto.

Wehn a shape-memory film is disposed on an outermost surface (e.g., front surface) of the flexible display 230, there may be restrictions on a selection of a shape-memory material forming the shape-memory film. For example, when the shape-memory film is disposed on the first protective film 310, a substantially transparent characteristic of the shape-memory film may be required so that visual information provided through the display panel 340 may be recognized from the outside. Since the shape-memory film is required to have a substantially transparent characteristic, the selection of the shape-memory material may be limited, and the process yield may be reduced because a process of attaching the shape-memory film to the outermost surface of the flexible display 230 is required.

When the shape-memory film is disposed at the outermost portion, the shape-memory film may discolor over time, thereby deteriorating the visibility of the flexible display 230. In order for the temperature of the shape-memory film to reach the glass transition temperature, it may be necessary to provide heat to the shape-memory film. When the heat is provided from the front of the flexible display 230, the heat may cause damage to the display panel 340. As described below, when the heat is provided from electronic components disposed inside the foldable electronic device 200, it may be difficult for the heat to be transferred to the shape-memory film disposed at the outermost portion of the flexible display 230. Since heat provided from a separate heat source is required to increase the temperature of the shape-memory film, the foldable electronic device 200 may be unusable while increasing the temperature of the shape-memory film to reduce the crease.

According to an embodiment, the shape-memory film 360 may be disposed between the display panel 340 and the first support plate 370. As the shape-memory film 360 is disposed between the display panel 340 and the first support plate 370, a degree of freedom in selection of the shape-memory material may be increased because a substantially transparent property is not required. As the shape-memory film 360 is disposed inside the flexible display 230, it may easily be provided with heat generated by electronic components disposed inside the foldable electronic device 200.

Although not illustrated, the flexible display 230 may include a plurality of shape-memory films. For example, the flexible display 230 may include another shape-memory film different from the shape-memory film 360. The other shape-memory film may be disposed between the display panel 340 and the support plate 370. A shape-memory material forming the shape-memory film 360 may be different from a shape-memory material forming the other shape-memory film. For example, a characteristic (e.g., elasticity or modulus value) of the shape-memory film 360 may be different from a characteristic of the other shape-memory films.

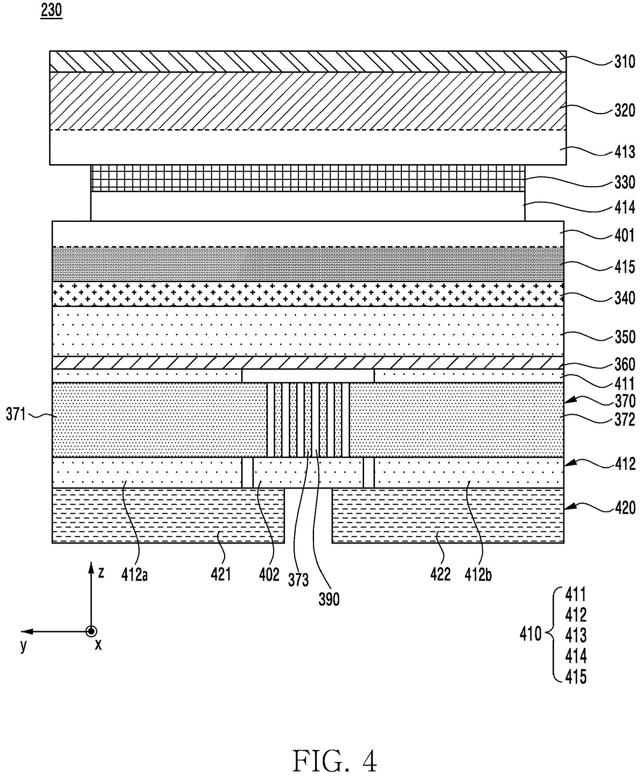

FIG. 4 is a cross-sectional view of a flexible display cut along line A-A' of FIG. 2C, according to an embodiment.

Referring to FIG. 4, a plurality of layers of the flexible display 230 may have different thicknesses. The flexible display 230 may include adhesive layers 410 that attach the plurality of layers. For example, each of the adhesive layers 410 may include a pressure sensitive adhesive (PSA). A damping layer 401 for protecting the display panel 340 may be disposed above the display panel 340 (e.g., in the +z direction). The damping layer 401 may be attached to the display panel 340 through an adhesive layer 415. The damping layer 401 may be omitted.

According to an embodiment, the flexible display 230 may include an electromagnetic induction panel 420 operably coupled with a stylus pen. The electromagnetic induction panel 420 may be referred to as a digitizer in terms of interacting with the stylus pen. For example, at least one processor 120 (e.g., the processor 120 of FIG. 1) may be configured to obtain input information from the interaction of the stylus pen and the electromagnetic induction panel 420. The processor may be configured to display information according to an operation of the stylus pen through the flexible display 230.

According to an embodiment, the flexible display 230 may include a first adhesive layer 411 attached to a front surface of the first support plate 370. For example, the first adhesive layer 411 may be disposed between the second protective film 350 and the first support plate 370 to attach the second protective film 350 and the first support plate 370. According to an embodiment, the flexible display 230 may include a second adhesive layer 412 attached to a rear surface of the first support plate 370. The second adhesive layer 412 may be disposed between the first support plate 370 and the electromagnetic induction panel 420 to attach the first support plate 370 and the electromagnetic induction panel 420. The electromagnetic induction panel 420 may include a first panel 421 attached below (e.g., in the -z direction) the first support portion 371 of the first support plate 370 and a second panel 422 attached below the second support portion 372 of the first support plate 370. The second panel 422 may be separated from the first panel 421. The second adhesive layer 412 may include an adhesive layer 412a that attaches the first panel 421 to the first support portion 371 and an adhesive layer 412b that attaches the first panel 421 to the second support portion 372 of the second panel 422. For example, a thickness of the electromagnetic induction panel 420 may be about 140 um to about 150 um.

According to an embodiment, the first adhesive layer 411 and/or the second adhesive layer 412 may include a shape-memory material. The first adhesive layer 411 and/or the second adhesive layer 412 may be configured to have a shape that is restored based on a glass transition temperature. The first adhesive layer 411 and/or the second adhesive layer 412 may provide tensile force to the display panel 340, thereby reducing a crease of the display panel 340.

According to an embodiment, the flexible display 230 may include a protective member 402 disposed below the bendable portion 373 of the first support plate 370. The protective member 402 may have elasticity to be deformed according to the deformation of the bendable portion 373 of the support plate. The protective member 402 may include, for example, thermoplastic polyurethane (TPU), but is not limited thereto. The protective member 402 may be disposed between the adhesive layers 412a and 412b of the second adhesive layer 412. The protective member 402 may be disposed between the adhesive layers 412a and 412b, thereby reducing a step formed by the adhesive layers 412a and 412b. The protective member 402 may reduce the inflow of foreign substances into the plurality of holes 390 in the bendable portion 373 by being attached below the bendable portion 373. For example, a thickness of the protective member 402 may be about 15 um to about 20 um.

According to an embodiment, a thickness of the shape-memory film 360 may be thicker than a thickness of the transparent cover 330. For example, the thickness of the transparent cover 330 may be about 30 um.

According to an embodiment, the thickness of the shape-memory film 360 may be thinner than a thickness of the protective layer 320. The thickness of the protective layer 320 may be about 80 um.

According to an embodiment, the thickness of the shape-memory film 360 may be thinner than a thickness of the first support plate 370. For example, the thickness of the first support plate 370 may be about 150 um to about 170 um. The shape-memory film 360 may be disposed below the second protective film 350 or may be disposed within the second protective film 350. The thickness of the second protective film 350 may be about 70 um to about 80 um.

According to an embodiment, the thickness of the shape-memory film 360 may be thicker than a thickness of the display panel 340. For example, the thickness of the display panel 340 may be about 30 um to about 80 um.

According to an embodiment, the thickness of the shape-memory film 360 may be thinner than a thickness of the electromagnetic induction panel 420. As described above, the thickness of the electromagnetic induction panel 420 may be about 140 um to about 150 um.

According to an embodiment, the thickness of the shape-memory film 360 may be thicker than a thickness of the protective member 402. As described above, the thickness of the protective member 402 may be about 15 um to about 20 um.

According to an embodiment, the flexible display 230 may include a third adhesive layer 413 interposed between the protective layer 320 and the transparent cover 330 and/or a fourth adhesive layer 414 interposed between the transparent cover 330 and the display panel 340. A thickness of the third adhesive layer 413 and a thickness of the fourth adhesive layer 414 may be about 50 um.

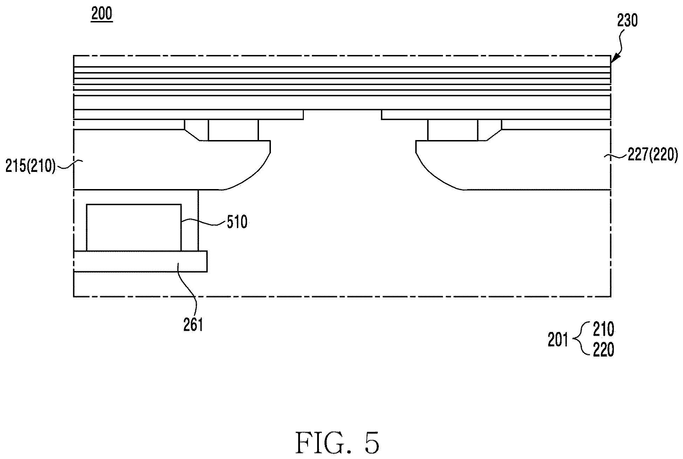

FIG. 5 illustrates a portion of a foldable electronic device.

Referring to FIG. 5, the first housing part 210 may include a first bracket 215, and the second housing part 220 may include a second bracket 227. The first bracket 215 may support electronic components 510 disposed in the first housing part 210, and the second bracket 227 may include electronic components 510 disposed in the second housing part 220.

According to an embodiment, electronic components 510 may be disposed in the foldable housing 201. For example, the electronic components 510 may be disposed on a printed circuit board (e.g., the first printed circuit board 261 of FIG. 2C) in the first housing part 210. For example, the electronic components 510 may include an application processor (e.g., the processor 120 of FIG. 1), memory (e.g., the memory 130 of FIG. 1), a power management module (e.g., the power management module 188 of FIG. 1), or a camera (e.g., the camera module 180 of FIG. 1), but are not limited thereto. The electronic components 510 may be configured to operate based on power provided from a battery (e.g., the battery 189 of FIG. 1). When the electronic components 510 operate, heat may be generated from the electronic components 510. The heat generated from the electronic components 510 may remain inside the foldable housing 201.

According to an embodiment, the flexible display 230 may be configured to reduce a crease by using heat generated from at least one of the electronic components 510 disposed within the foldable housing 201.

For example, when heat generated from the electronic components 510 is provided to a shape-memory film (e.g., the shape-memory film 360 of FIG. 3) disposed in the flexible display 230, a temperature of the shape-memory film 360 may increase. When the temperature of the shape-memory film 360 reaches a glass transition temperature, the shape-memory film 360 may have a restored shape. For example, the restored shape may be a flat shape. As the shape of the shape-memory film 360 is transformed into the restored shape in response to the glass transition temperature, the shape-memory film 360 may be configured to provide tensile force to a display panel (e.g., the display panel 340 of FIG. 3). When the tensile force is applied to the display panel 340, the crease of the display panel 340 may be reduced by the tensile force. As the crease of the display panel 340 is reduced, the visibility of the flexible display 230 may be improved. The tensile force may be applied to the display panel 340 in a direction of unfolding the display panel 340.

According to an embodiment, since the electronic components 510 are disposed within the foldable housing 201 and the shape-memory film 360 is positioned over the foldable housing 201, a component for transferring heat from at least one of the electronic components 510 to the shape-memory film 360 may be required. When the heat generated from the at least one of the electronic components 510 is effectively transferred to the shape-memory film 360, the temperature of the shape-memory film 360 may easily rise to the glass transition temperature, so tensile force may be provided to reduce the crease without using a separate heat source. For example, a thermal interface material (TIM) is applied between the electronic components 510 disposed on the printed circuit board 261 and the first bracket 215, and heat may be conducted from the electronic components 510 to the first bracket (215) through the thermal interface material. In order for the heat conducted to the first bracket 215 to be transferred to the flexible display 230, the first bracket 215 may include an opening, but is not limited thereto.

According to an embodiment, the foldable electronic device 200 may include a conductive portion included in the first support plate 370 to increase the temperature of the shape-memory film 360. The shape-memory film 360 may receive, from the conductive portion, heat reaching the glass transition temperature. The shape-memory film 360 may be configured to provide tensile force to reduce a crease of the display panel 340 by a shape of the shape-memory film 360 that is restored based on the temperature of the shape-memory film 360 reaching the glass transition temperature.

The conductive portion of the first support plate 370 for transferring heat to the shape-memory film 360 may be implemented in various shapes. Hereinafter, examples of the conductive portion are described.

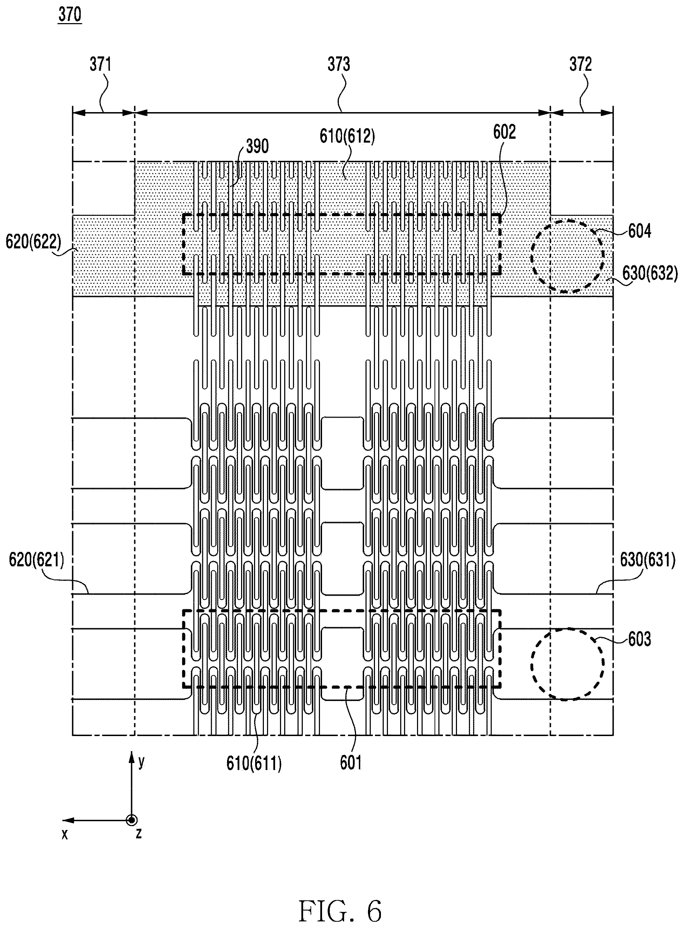

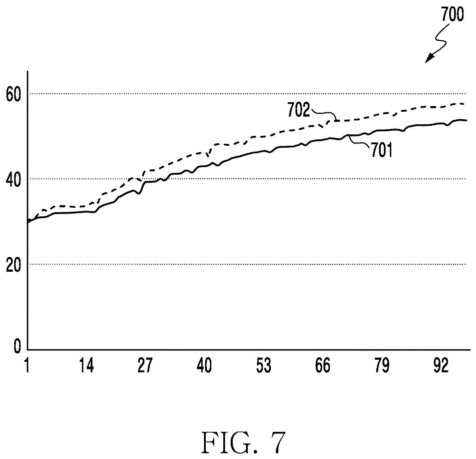

FIG. 6 illustrates a portion of an exemplary first support plate. FIG. 7 is a graph illustrating a temperature change in a partial region according to an operation of an electronic component.

Referring to FIG. 6, the first support plate 370 may include a first support portion 371, a second support portion 372, and a bendable portion 373. The first support portion 371 may correspond to a first portion (e.g., the first portion 341 of FIG. 3) of a display panel (e.g., the display panel 340 of FIG. 3). The second support portion 372 may correspond to a second portion (e.g., the second portion 342 of FIG. 3) of the display panel 340. The bendable portion 373 may correspond to a third portion (e.g., the third portion 343 of FIG. 3) of the display panel 340. The bendable portion 373 may be disposed between the first support portion 371 and the second support portion 372.

According to an embodiment, the bendable portion 373 may include a plurality of holes 390 and a first conductive portion 610. The first conductive portion 610 may be formed from a thermally conductive material. For example, the first conductive portion 610 may be formed from a metal (e.g., copper) having high thermal conductivity or graphite, but is not limited thereto.

According to an embodiment, the first conductive portion 610 may include a first sub-conductive portion 611 in a form of a wire disposed to bypass a plurality of holes 390 included in the bendable portion 373. It may include a second sub-conductive portion 612 in a form of a conductive region forming at least a portion of the bendable portion 373.

According to an embodiment, the first support portion 371 may include a second conductive portion 620, and/or the second support portion 372 may include a third conductive portion 630. The second conductive portion 620 and the third conductive portion 630 may be formed from a thermally conductive material, respectively.

Since the bendable portion 373 corresponds to the third portion 343 of the display panel 340, it may be difficult to overlap with electronic components disposed inside a foldable housing (e.g., the foldable housing 201 of FIG. 2). The second conductive portion 620 in the first support portion 371 may be connected to a side of the first conductive portion 610, and the third conductive portion 630 may be connected to another side of the first conductive portion 610. The second conductive portion 620 may be configured to transfer heat generated from an electronic component disposed in a first housing part (e.g., the first housing part 210 of FIG. 2A) to the first conductive portion 610 of the bendable portion 373. The third conductive portion 630 may be configured to transfer heat generated from an electronic component disposed in a second housing part (e.g., the second housing part 220 of FIG. 2A) to the first conductive portion 610 of the bendable portion 373. Even when the first conductive portion 610 disposed in the bendable portion 373 does not overlap with the electronic component generating heat, the heat may be transferred to the first conductive portion 610 in the bendable portion 373 through the second conductive portion 620 or the third conductive portion 630.

For example, the second conductive portion 620 may include a third sub-conductive portion 621 connected to a side of the first sub-conductive portion 611 and a fourth sub-conductive portion 622 connected to a side of the second sub-conductive portion 612. The third sub-conductive portion 621 may be in a form of a conductive wire, and the fourth sub-conductive portion 622 may be in a form of a conductive region forming at least a portion of the first support portion 371. For example, the third conductive portion 630 may include a fifth sub-conductive portion 631 connected to another side of the first sub-conductive portion 611 and a sixth sub-conductive portion 632 connected to another side of the second sub-conductive portion 612. The fifth sub-conductive portion 631 may be in a form of a conductive wire, and the sixth sub-conductive portion 632 may be in a form of a conductive region forming at least a portion of the second support portion 372.

According to an embodiment, the first conductive portion 610 may be configured to transfer heat generated by at least one of electronic components (e.g., the electronic components 510 of FIG. 5) disposed inside the foldable housing 201 to a shape-memory film (e.g., the shape-memory film 360 of FIG. 3). Since the first conductive portion 610 is formed from a thermally conductive material having high thermal conductivity, the heat may be effectively transferred from the foldable housing 201 to the shape-memory film 360 inside a flexible display (e.g., the flexible display 230 of FIG. 3).

According to an embodiment, a heat transfer speed and heat transfer efficiency may differ according to the area of the first conductive portion 610. For example, as the area of the first conductive portion 610 increases, the area formed from a material having high thermal conductivity becomes larger, so heat may be transferred quickly to the shape-memory film 360.

According to an embodiment, the first conductive portion 610 may include a first sub-conductive portion 611 and a second sub-conductive portion 612. The first sub-conductive portion 611 may be in a form of a wire disposed to bypass a plurality of holes 390 in a portion (e.g., the first region 601 of FIG. 6) of the bendable portion 373. The second sub-conductive portion 612 may be in a form of forming a partial region of the first support plate 370 as a conductive region by forming the bendable portion 373 with a thermally conductive material in another portion (e.g., the second region 602 of FIG. 6) of the bendable portion 373. The area of the first sub-conductive portion 611 may be narrower than the area of the second sub-conductive portion 612. Since the first sub-conductive portion 611 is disposed to bypass the plurality of holes 390, it may have a narrower area than the second sub-conductive portion 612 that forms at least a portion of the bendable portion 373.

For example, a first electronic component 603 and a second electronic component 604 may be disposed below the first support plate 370 (e.g., in the -z direction). A first region 601 may be positioned adjacent to the first electronic component 603. A second region 602 may be positioned adjacent to the second electronic component 604. Heat generated when the first electronic component 603 operates may be substantially transferred to the first sub-conductive portion 611 disposed in the first region 601. Heat generated from the first electronic component 603 may be transferred to the first sub-conductive portion 611 of the first conductive portion 610 through a fifth sub-conductive portion 631 of the third conductive portion 630. Heat generated when the second electronic component 604 operates may be substantially transferred to the second sub-conductive portion 612 disposed in the second region 602. The heat generated from the second electronic component 604 may be transferred to the second sub-conductive portion 612 of the first conductive portion 610 through a sixth sub-conductive portion 632 of the third conductive portion 630.

FIG. 7 is a graph 700 that measures a temperature change in a first region (e.g., the first region 601 of FIG. 6) and a temperature change in a second region (e.g., the second region 602 of FIG. 6), after a first electronic component (e.g., the first electronic component 603 of FIG. 6) and a second electronic component (e.g., the second electronic component 604 of FIG. 6) operate. The x-axis of the graph 700 indicates time (unit: seconds), and the y-axis of the graph 700 indicates a temperature (unit: degrees Celsius).

A first graph 701 indicates a temperature change in the first region 601 over time after the first electronic component 603 operates. A second graph 702 indicates a temperature change in the second region 602 over time after the second electronic component 604 operates. Comparing the first graph 701 and the second graph 702, a temperature of the first region 601 is lower than a temperature of the second region 602 over time. For example, in the graph 700 of FIG. 7, a maximum temperature indicated by the first graph 701 is about 53.7°C, and a maximum temperature indicated by the second graph 702 is about 55.9°C. Since the area of a first sub-conductive portion (e.g., the first sub-conductive portion 611 of FIG. 6) disposed within the first region 601 is narrower than the area of a second sub-conductive portion (e.g., the second sub-conductive portion 612 of FIG. 6) disposed in the second region 602, the difference in the temperatures may be caused.

Referring back to FIG. 6, heat generated when the first electronic component 603 operates may be substantially spread to the first sub-conductive portion 611 adjacent to the first electronic component 603. Since the first sub-conductive portion 611 has a relatively narrow area, the heat generated from the first electronic component 603 may be transferred relatively slowly, and the transferred heat energy may be relatively small. The heat generated when the second electronic component 604 operates may be substantially spread to the second sub-conductive portion 612 adjacent to the second electronic component 604. Since the second sub-conductive portion 612 has a relatively large area, the heat generated from the second electronic component 604 may be transferred relatively quickly, and the transferred heat energy may be relatively large. Due to the difference in the areas, the temperature of the first region 601 may be relatively lower than the temperature of the second region 602.

According to an embodiment, the shape-memory film 360 may receive heat through the first conductive portion 610 of the bendable portion 373. Since the shape-memory film 360 may provide tensile force for reducing a crease of the display panel 340 when the temperature of the shape-memory film 360 reaches the glass transition temperature, the effect of reducing the crease may be improved as heat is transferred to the shape-memory film 360 more quickly and more efficiently. As illustrated in FIG. 6, since the area of the second sub-conductive portion 612 forming at least a portion of the first support plate 370 is relatively large, the first conductive portion 610 may quickly transfer heat from the electronic component to the shape-memory film 360. According to an embodiment, in order to improve the crease reduction effect by the shape-memory film 360, the first conductive portion 610 may be formed from a thermally conductive material and may form at least a portion of the bendable portion 373. However, the embodiments of the present disclosure are not limited thereto, and the first conductive portion 610 may be in a wire form, like the first sub-conductive portion 611. In FIG. 6, for convenience of explanation, both the first sub-conductive portion 611 and the second sub-conductive portion 612 are illustrated, but the bendable portion 373 may include at least one of the first sub-conductive portion 611 and the second sub-conductive portion 612.

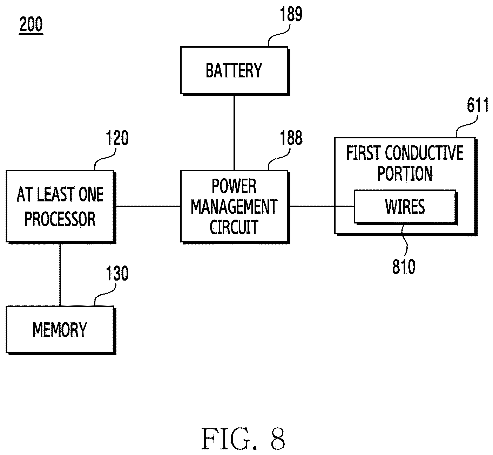

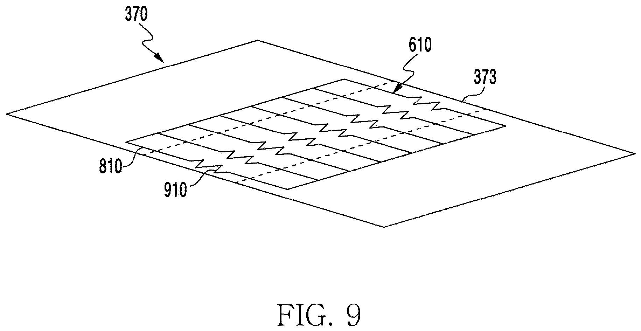

FIG. 8 is a block diagram of a foldable electronic device according to an embodiment. FIG. 9 illustrates a portion of an exemplary first support plate.

Referring to FIG. 8, the foldable electronic device 200 may include at least one processor (e.g., the processor 120 of FIG. 1), memory (e.g., the memory 130 of FIG. 1), a battery (e.g., the battery 189 of FIG. 1), and power management circuitry (e.g., the power management module 188 of FIG. 1). For example, the first conductive portion 610 may include electrical wires 810.

According to an embodiment, at least one processor 120 may include processing circuitry. The at least one processor 120 may include an application processor (AP) (e.g., a central processing unit (CPU)) and/or a communication processor (CP) (e.g., a modem), but is not limited thereto. The at least one processor 120 may include a graphics processing unit (e.g., GPU), a neural processing unit (NPU) (e.g., an artificial intelligence (AI) chip), a wireless-fidelity (Wi-Fi) chip, a Bluetooth^{™} chip, a global positioning system (GPS) chip, a near field communication (NFC) chip, connectivity chips, a sensor controller, a touch controller, a finger-print sensor controller, a display drive integrated circuit (DDI), an audio CODEC chip, a universal serial bus (USB) controller, a camera controller, an image processing IC, a microprocessor unit (MPU), a system on chip (SoC), an IC, or other similar circuits.

According to an embodiment, the memory 130 may include one or more storage mediums storing instructions. It should be understood that the blocks of each flow chart and a combination of the flow charts in the present disclosure may be performed by one or more computer programs including computer-executable instructions. All of the one or more computer programs may be stored in a single memory, or the one or more computer programs may be divided into different portions stored in different multiple memories.

According to an embodiment, the battery 189 may store power (electrical energy) to provide power to electronic components of the foldable electronic device 200. The battery 189 may be a rechargeable secondary battery. The battery 189 may be configured to provide power for an operation of the electronic components (e.g., the electronic components 510 of FIG. 5).

The foldable electronic device 200 may include power management integrated circuitry (PMIC) 188 (e.g., the power management module 188 of FIG. 1) for managing power provided from the battery 189 to electronic components. The PMIC 188 may be configured to convert power provided from the battery 189 into power required by each of the electronic components and distribute the converted power to each of the electronic components. The PMIC 188 may include charging circuitry configured to charge the battery 189 using power supplied from an external power source, a power regulator configured to adjust a voltage level or a current level of power supplied from the external power source or the battery 189, and/or a power gauge for measuring usage status information for the battery 189 (e.g., capacity, number of charge/discharge cycles, voltage, or temperature of the battery 189).

According to an embodiment, the first conductive portion 610 may include electrical wires 810. The electrical wires 810 may be electrically connected to the battery 189. For example, the electrical wires 810 may receive, via the PMIC 188, power from the battery 189.

Referring to FIG. 9, each of the electrical wires 810 may include a resistor 910 configured to generate heat according to power provided from a battery (e.g., the battery 189 of FIG. 8). When power is supplied from the battery 189 to the electrical wires 810, a current may flow from the battery 189 to the electrical wires 810 via power management integrated circuitry (e.g., the PMIC 188 of FIG. 8). When a current flows along the electrical wires 810, the current may pass through the resistor 910. When the current passes through the resistor 910, electrons collide with atoms of the resistor 910, and kinetic energy of the electrons may be reduced by the collision. The reduced kinetic energy of the electrons may be converted into heat energy, and heat may be emitted from the resistor 910. The heat emitted from the resistor 910 may be transferred to a shape-memory film (e.g., the shape-memory film 360 of FIG. 3). The temperature of the shape-memory film 360 may increase due to the heat generated from the resistance 910 of each of the electrical wires 810. When the temperature of the shape-memory film 360 reaches the glass transition temperature, the shape-memory film 360 is restored to a flat original shape, and a crease of a display panel (e.g., the display panel 340 of FIG. 3) may be reduced due to tensile force generated when the shape-memory film 360 is restored to the original shape.

The first conductive portion 610, which is described with reference to FIG. 6, may be formed from a thermally conductive material, and may transfer heat generated from at least one of electronic components to the shape-memory film 360. The first conductive portion 610, which is described with reference to FIGS. 8 and 9, may be formed of the electrical wires 810 including the resistor 910, and may transfer heat generated by power provided from the battery 189 to the shape-memory film 360. In terms of heat being generated based on power, the electrical wires 810 described with reference to FIG. 9 may be different from the first sub-conductive portion 611 in the form of a wire illustrated in FIG. 6.

Referring back to FIG. 8, the at least one processor 120 may be configured to provide power from the battery 189 to the electrical wires 810. For example, the at least one processor 120 may be configured to provide power from the battery 189 to the electrical wires 810 of a bendable portion (e.g., the bendable portion 373 of FIG. 9), by controlling the PMIC 188.

According to an embodiment, charging status information of the battery 189 may be identified using a sensor module (e.g., the sensor module 176 of FIG. 1) or the PMIC 188. For example, the at least one processor 120 may be configured to identify whether the battery 189 is charging, via the sensor module or the PMIC 188.

According to an embodiment, the at least one processor 120 may be configured to provide power from the battery 189 to the electrical wires 810, based on identifying that the battery 189 is charging. Instructions stored in the memory 130, when executed by the at least one processor 120 individually or collectively, may cause the foldable electronic device 200 to provide power from the battery 189 to the electrical wires 810 including the resistor 910, based on identifying that the battery 189 is charging. The operation of reducing a crease by transferring heat generated from the resistor 910 to the shape-memory film 360 may cause power consumption of the battery 189 because it uses power of the battery 189. If the operation is performed when a state of charge (SOC) of the battery 189 is insufficient, the battery 189 may be discharged and the foldable electronic device 200 may not be used. According to an embodiment, the foldable electronic device 200 may prevent the battery 189 from being discharged by the operation by providing power from the battery 189 to the electrical wires 810 while charging. However, it is not limited thereto. For example, the operation of providing power from the battery 189 to the electrical wires 810 may be performed by an input from a user. For example, the operation of providing power from the battery 189 to the electrical wires 810 may be performed when the SOC of the battery 189 is greater than or equal to a threshold value (e.g., about 90% SOC).

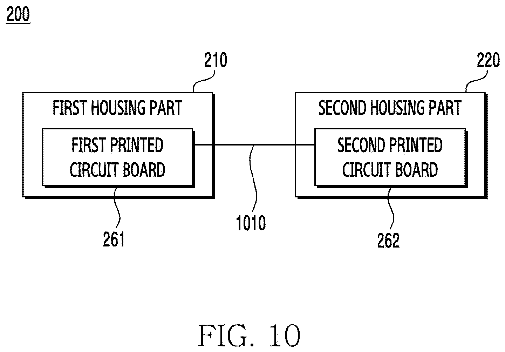

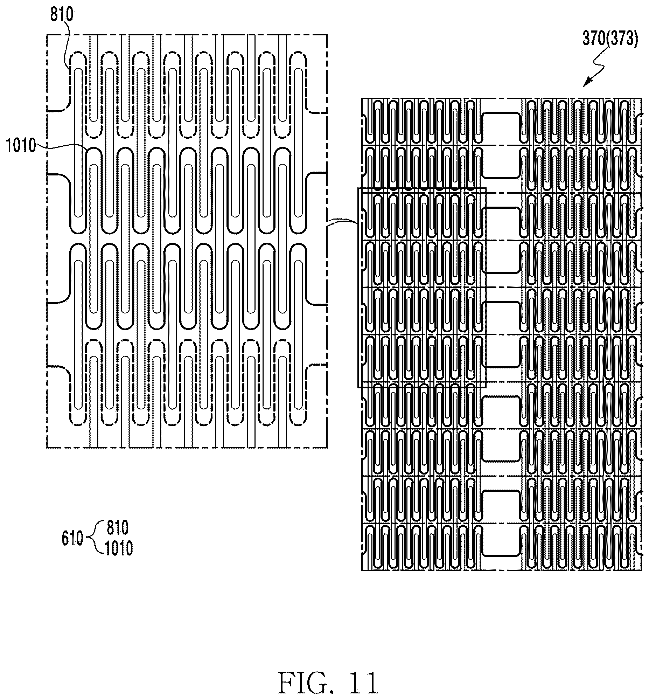

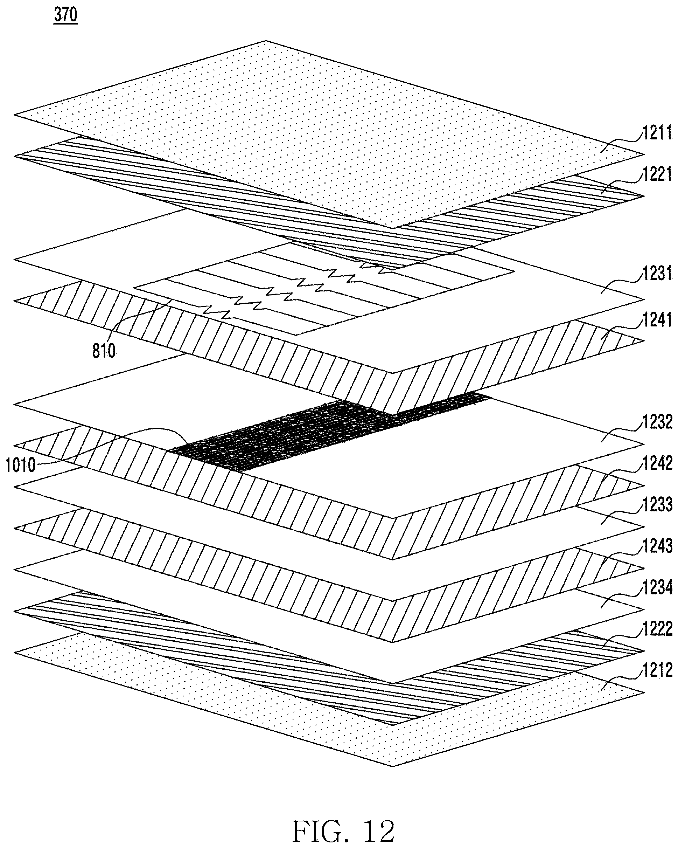

FIG. 10 is a block diagram of a foldable electronic device according to an embodiment. FIG. 11 illustrates a portion of an exemplary first support plate. FIG. 12 is an exploded perspective view of a first support plate.

Referring to FIG. 10, the foldable electronic device 200 may include a first printed circuit board 261 and a second printed circuit board 262. Each of the first printed circuit board 261 and the second printed circuit board 262 may include a plurality of conductive layers, and a plurality of non-conductive layers that are alternatively stacked with the plurality of conductive layers. The printed circuit boards 261 and 262 may provide electrical connections between various electronic components by using wires and conductive vias formed on the plurality of conductive layers.

According to an embodiment, the first printed circuit board 261 may be disposed in the first housing part 210. The second printed circuit board 262 may be disposed in the second housing part 220. Since the first printed circuit board 261 and the second printed circuit board 262 are separated from each other, a component for electrically connecting the first printed circuit board 261 and the second printed circuit board 262 may be required. For example, at least one processor (e.g., the processor 120 of FIG. 1) electrically connected to the first printed circuit board 261 may be electrically connected to an electronic component (e.g., speaker) electrically connected to the second printed circuit board 262 through a component for electrically connecting the first printed circuit board 261 and the second printed circuit board 262.

According to an embodiment, the foldable electronic device 200 may include signal lines 1010 configured to electrically connect the first printed circuit board 261 and the second printed circuit board 262. The signal lines 1010 may be connected to the first printed circuit board 261 and the second printed circuit board 262, respectively. For example, a signal for controlling the electronic component from the at least one processor 120 may be transferred through the first printed circuit board 261, at least one signal line among the signal lines 1010, and the second printed circuit board 262. For example, a wireless signal received by an antenna electrically connected to the second printed circuit board 262 may be transferred to the at least one processor 120, through the second printed circuit board 262, at least one signal line among the signal lines 1010, and the first printed circuit board 261.

Referring to FIG. 11, the first conductive portion 610 may include signal lines 1010. For example, the first conductive portion 610 may include the signal lines 1010. As described above, the signal lines 1010 may be configured to electrically connect a first printed circuit board (e.g., the first printed circuit board 261 of FIG. 10) disposed in a first housing part (e.g., the first housing part 210 of FIG. 10) and a second printed circuit board (e.g., the second printed circuit board 262 of FIG. 10) disposed in a second housing part (e.g., the second housing part 220 of FIG. 10). For example, a flexible printed circuit board (e.g., the flexible printed circuit board 263 of FIG. 2C) illustrated in FIG. 2C may be omitted, and signals between the first printed circuit board 261 and the second printed circuit board 262 may be transmitted through the signal lines 1010 in the bendable portion 373.

According to an embodiment, when signals between the first printed circuit board 261 and the second printed circuit board 262 are transmitted through the signal lines 1010, heat may be generated. The heat generated by the transmission of the signals may be transferred to a shape-memory film (e.g., the shape-memory film 360 of FIG. 3) disposed above the first support plate 370. A temperature of the shape-memory film 360 may be increased due to the heat transferred from the signal lines 1010. When the temperature of the shape-memory film 360 reaches the glass transition temperature, the shape-memory film 360 may have a restored shape. For example, the restored shape may be a flat shape. As a shape of the shape-memory film 360 is deformed into a restored shape in response to the glass transition temperature, the shape-memory film 360 may be configured to provide tensile force to a display panel (e.g., the display panel 340 of FIG. 3). When the tensile force is applied to the display panel 340, a crease of the display panel 340 may be reduced by the tensile force. As the crease of the display panel 340 is reduced, the visibility of the flexible display 230 may be improved. The tensile force may be applied to the display panel 340 in a direction of unfolding the display panel 340.

According to an embodiment, the first conductive portion 610 may include both the electrical wires 810 and the signal lines 1010. The electrical wires 810 and the signal lines 1010 may be disposed on one layer of the first support plate 370. For example, the first support plate 370 may be formed by laminating a plurality of layers. The electrical wires 810 and the signal lines 1010 may be disposed on one layer among a plurality of layers forming the first support plate 370. When the electrical wires 810 and the signal lines 1010 are disposed on one layer, the electrical wires 810 and the signal lines 1010 may be disposed alternately. Heat generated from the electrical wires 810 and heat generated from the signal lines 1010 may be transferred to the shape-memory film 360. The shape-memory film 360 may be configured to have a restored shape based on the heat generated from the electrical wires 810 and the heat generated from the signal lines 1010. In an embodiment, the electrical wires 810 may include a resistor 910, but this is not illustrated in FIG. 11.

Referring to FIG. 12, the first support plate 370 may include a plurality of layers. The first support plate 370 may be formed by laminating the plurality of layers. For example, the plurality of layers may include layers 1211 and 1212 formed from fiber reinforced plastic (FRP), copper plating layers 1221 and 1222, copper foils 1231, 1232, 1233, and 1234, layers 1241, 1242, and 1243 formed from polymer (e.g., polyimide (PI)), and an adhesive layer 1250, but it is not limited thereto.

According to an embodiment, the first conductive portion 610 may include both the electrical wires 810 and the signal lines 1010. As illustrated in FIG. 12, the electrical wires 810 and the signal lines 1010 may be disposed on different layers among the plurality of layers, respectively. For example, the electrical wires 810 may be disposed on a first layer (e.g., a copper film 1231), and the signal lines 1010 may be disposed on a second layer (e.g., another copper film 1232) different from the first layer. Since the electrical wires 810 are disposed on the first layer, and the signal lines 1010 are disposed on the second layer different from the first layer, the electrical wires 810 and the signal lines 1010 may not be disposed alternately.

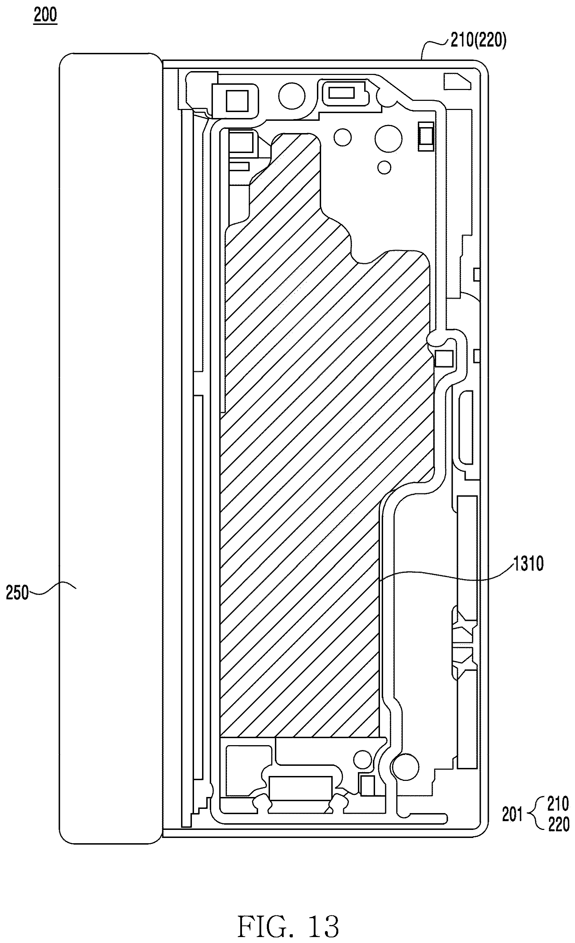

FIG. 13 illustrates a foldable electronic device including a vapor chamber, according to an embodiment.

Referring to FIG. 13, the foldable electronic device 200 may include a vapor chamber 1310. The vapor chamber 1310 may be configured to spread and cool heat generated from electronic components (e.g., the electronic components 510 of FIG. 5) for heat dissipation. For example, the vapor chamber 1310 may include a refrigerant (e.g., water). When heat generated from at least one of the electronic components is transferred to the vapor chamber 1310, the refrigerant may be vaporized by the heat. When the refrigerant is vaporized, it absorbs heat energy from the surroundings, which may lower the temperature of the surroundings. When the vaporized refrigerant flows to a place with a low temperature, the vaporized refrigerant may be liquefied again. When the vaporized refrigerant is liquefied, heat may be emitted.

According to an embodiment, the vapor chamber 1310 may be disposed within the foldable housing 201. For example, the vapor chamber 1310 may be disposed within the first housing part 210 or the second housing part 220. A refrigerant may be accommodated within the vapor chamber 1310. Since the refrigerant flows along the interior of the vapor chamber 1310, heat may be spread in a region in which the vapor chamber 1310 is disposed.

According to an embodiment, the vapor chamber 1310 may be disposed adjacent to the hinge assembly 250. Since the hinge assembly 250 rotatably connects the first housing part 210 and the second housing part 220, it may overlap the third portion 343 of the display panel 340 and the bendable portion 373 of the first support plate 370. As the vapor chamber 1310 is disposed adjacent to the hinge assembly 250, heat generated from the electronic components may be spread around the hinge assembly 250 through the vapor chamber 1310. For example, the refrigerant vaporized by the heat generated from the electronic components may flow around the hinge assembly 250 and then be liquefied, and the heat emitted when the refrigerant is liquefied may be transferred to a bendable portion (e.g., the bendable portion 373 of FIG. 3) of a support plate (e.g., the first support plate 370 of FIG. 3) overlapping the hinge assembly 250. A first conductive portion (e.g., the first conductive portion 610 of FIG. 6, the electrical wires 810 of FIG. 9, and/or the signal lines 1100 of FIG. 11) within the bendable portion 373 may transfer the heat to the shape-memory film 360. The shape-memory film 360 may provide tensile force to a display panel (e.g., the display panel 340 of FIG. 3) to reduce a crease of the display panel 340, by having a restored shape based on the heat.

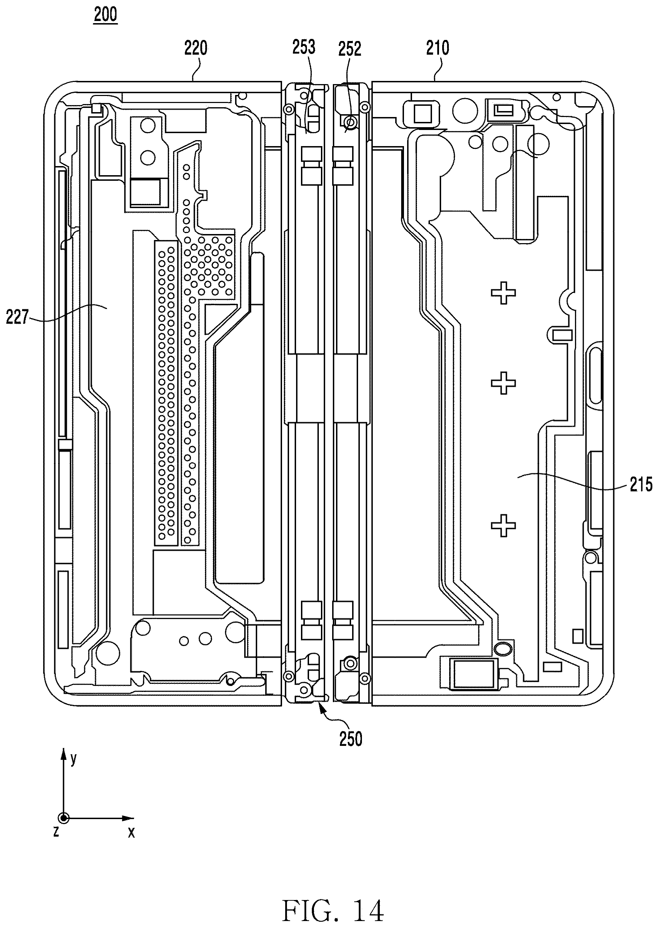

FIG. 14 illustrates an interior of a foldable electronic device, according to an embodiment.

Referring to FIG. 14, the hinge assembly 250 may include a first hinge plate 252 and a second hinge plate 253. The first hinge plate 252 and the second hinge plate 253 may be disposed between the first housing part 210 and the second housing part 220. The first hinge plate 252 and the second hinge plate 253 may rotatably connect the first housing part 210 and the second housing part 220. For example, the first hinge plate 252 may be coupled to a first bracket 215 of the first housing part 210. Although not illustrated, the first hinge plate 252 and the second hinge plate 253 may be rotatably coupled to a hinge bracket. The first housing part 210 and the first hinge plate 252 may rotate together. The second hinge plate 253 may be coupled to a second bracket 227 of the second housing part 220. The second housing part 220 and the second hinge plate 253 may rotate together.

According to an embodiment, since the first hinge plate 252 and the second hinge plate 253 rotatably connect the first housing part 210 and the second housing part 220, they may overlap with a third portion (e.g., the third portion 343) of a display panel (e.g., the display panel 340 of FIG. 3) and a bendable portion (e.g., the bendable portion 373 of FIG. 3) of a first support plate (e.g., the first support plate 370 of FIG. 3). For example, when a flexible display (e.g., the flexible display 230 of FIG. 2A) is viewed from above, the first hinge plate 252 and the second hinge plate 253 may overlap with the third portion 343 of the display panel 340 and the bendable portion 373 of the first support plate 370.

According to an embodiment, the first hinge plate 252 and the second hinge plate 253 may be formed from a thermally conductive material, respectively. For example, the first hinge plate 252 and the second hinge plate 253 may include a copper alloy having high thermal conductivity, but it is not limited thereto. Since the first hinge plate 252 and the second hinge plate 253 include a thermally conductive material, respectively, the first hinge plate 252 and the second hinge plate 253 may transfer heat generated by electronic components inside the foldable housing 201 to the first conductive portion 610 of the bendable portion 373. The first conductive portion 610 in the bendable portion 373 may transfer the heat to a shape-memory film (e.g., the shape-memory film 360 of FIG. 3). The shape-memory film 360 may provide tensile force to reduce a crease of the display panel 340 to the display panel 340, by having a restored shape based on the heat.

According to an embodiment, a silver-nano coating layer may be formed in a region of the foldable housing 201 or a lower portion of the shape-memory film 360, which are disposed below the flexible display 230. Since the silver-nano coating layer has high thermal conductivity, it may transfer heat inside the foldable housing 201 to the shape-memory film 360.

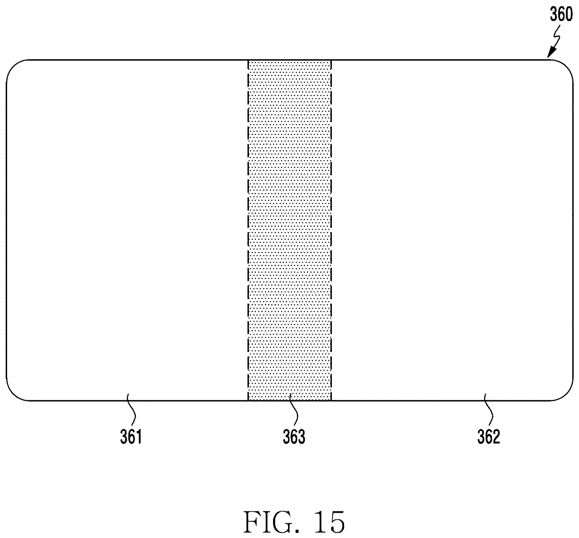

FIG. 15 illustrates an example of a shape-memory film.

Referring to FIG. 15, the shape-memory film 360 may be formed partially from a shape-memory material. For example, when a state of the foldable electronic device 200 is changed, a third portion (e.g., the third portion 343 of FIG. 3) of a display panel (e.g., the display panel 340 of FIG. 3) may be folded or unfolded, and a first portion (e.g., the first portion 341 of FIG. 3) of the display panel 340 and a second portion (e.g., the second portion 342 of FIG. 3) of the display panel 340 may maintain a substantially flat shape. As the third portion 343 of the display panel 340 is repeatedly folded or unfolded, a crease may be formed primarily within the third portion 343 of the display panel 340. Since the first portion 341 of the display panel 340 and the second portion 342 of the display panel 340 maintain a substantially flat shape independently of the state of the foldable electronic device 200, a crease may not be formed within the first portion 341 of the display panel 340 and the second portion 342 of the display panel 340.

According to an embodiment, the shape-memory film 360 may have a shape corresponding to a shape of the display panel 340. For example, the shape-memory film 360 may include a first portion 361, a second portion 362, and a third portion 363.

According to an embodiment, the first portion 361 of the shape-memory film 360 may correspond to the first portion 341 of the display panel 340. For example, the first portion 361 of the shape-memory film 360 may be positioned between the first portion 341 of the display panel 340 and a first support portion (e.g., the first support portion 371 of FIG. 3) of a first support plate (e.g., the first support plate 370 of FIG. 3).

According to an embodiment, the second portion 362 of the shape-memory film 360 may correspond to the second portion 342 of the display panel 340. For example, the second portion 362 of the shape-memory film 360 may be positioned between the second portion 342 of the display panel 340 and a second support portion (e.g., the second support portion 372 of FIG. 3) of the first support plate 370.

According to an embodiment, the third portion 363 of the shape-memory film 360 may correspond to the third portion 343 of the display panel 340. For example, the third portion 363 of the shape-memory film 360 may be positioned between the third portion 343 of the display panel 340 and a bendable portion (e.g., the bendable portion 373 of FIG. 3) of the first support plate 370. The third portion 363 of the shape-memory film 360 may extend from the first portion 361 of the shape-memory film 360 to the second portion 362 of the shape-memory film 360.

According to an embodiment, in order to reduce a crease formed in the third portion 343 of the display panel 340, the third portion 363 of the shape-memory film 360 corresponding to the third portion 343 of the display panel 340 may be formed from a shape-memory material. The first portion 361 of the shape-memory film 360 corresponding to the first portion 341 of the display panel 340 and the second portion 362 of the shape-memory film 360 corresponding to the second portion 342 of the display panel 340 may be formed from a relatively rigid material.

According to an embodiment, heat may be transferred from a first conductive portion (e.g., the first conductive portion 610 of FIG. 6, the electrical wires 810 of FIG. 9, and/or the signal lines 1100 of FIG. 11) of the first support plate 370 to the third portion 363 of the shape-memory film 360. When a temperature of the third portion 363 of the shape-memory film 360 reaches a glass transition temperature due to the heat, the third portion 363 of the shape-memory film 360 may be configured to have a restored shape. Since the third portion 363 of the shape-memory film 360 corresponds to the third portion 343 of the display panel 340, tensile force due to the restored shape of the third portion 363 of the shape-memory film 360 may be applied to the third portion 343 of the display panel 340. As described above, since the crease is mainly formed within the third portion 343 of the display panel 340, the crease formed within the third portion 343 of the display panel 340 may be reduced by the tensile force.

In the shape-memory film 360 according to an embodiment, only the third portion 363 of the shape-memory film 360 corresponding to the third portion 343 of the display panel 340 may be formed from a shape-memory material. The first portion 361 of the shape-memory film 360 and the second portion 362 of the shape-memory film 360 may be formed from a relatively rigid material, thereby supporting the first portion 341 of the display panel 340 and the second portion 342 of the display panel 340. The third portion 363 of the shape-memory film 360 corresponding to the third portion 343 of the display panel 340 in which a crease is mainly formed may be formed from a shape-memory material, thereby reducing the crease.

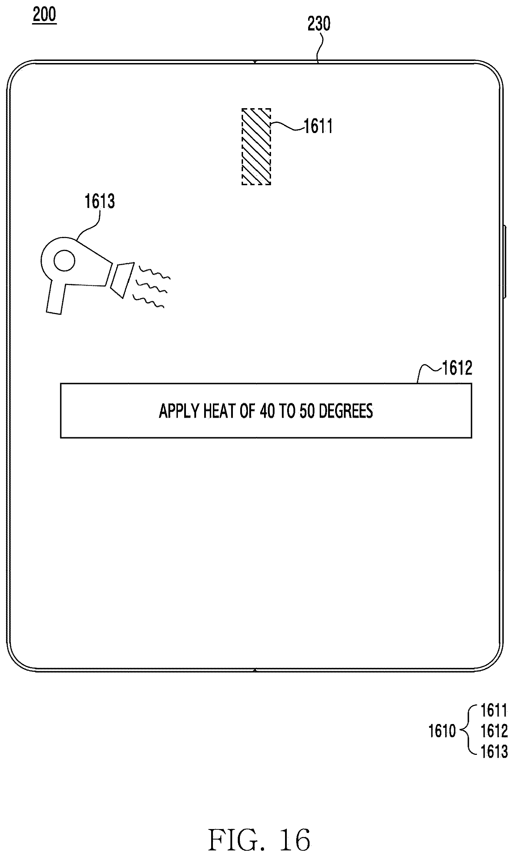

FIG. 16 illustrates a visual object provided by a foldable electronic device according to an embodiment.

Referring to FIG. 16, a foldable electronic device 200 according to an embodiment may identify a crease formed in a display panel (e.g., the display panel 340 of FIG. 3). The foldable electronic device 200 may be configured to display a visual object 1610 indicating a request to apply heat to reduce a crease through the flexible display 230, based on identifying the crease.

According to an embodiment, the foldable electronic device 200 may include an artificial intelligence model trained to identify a crease. For example, at least one processor (e.g., the processor 120 of FIG. 1) may analyze data such as the number of times the foldable electronic device 200 has been folded or unfolded or a time during which a folded state of the foldable electronic device 200 is maintained, by using the AI model. The at least one processor 120 may be configured to calculate a probability that a crease will be formed on the display panel 340 from analysis of the data using the AI model. When the calculated probability exceeds a threshold value, the at least one processor 120 may be configured to display the visual object 1610 on a screen displayed through the flexible display 230. For example, the visual object 1610 may include a first visual object 1610 indicating a region of the display panel 340 where a crease is generated, a second visual object 1620 including text requesting provision of heat, and/or a third visual object 1630 including an icon requesting provision of heat, but is not limited thereto. For example, the text may include a phrase to provide heat at an appropriate temperature to a region of the display panel 340 where a crease is generated. The visual object 1610 may be guided so that the user may always check it through user settings.

For example, the user may recognize the generation of the crease through the visual object 1610 displayed through the flexible display 230 and apply heat. For example, the user may apply heat using a separate heat source, or may also apply heat through a user input requesting execution of a function of the foldable electronic device 200 related to the application of heat. For example, when the foldable electronic device 200 includes the electrical wires 810 of FIG. 9, the user may recognize the generation of the crease through the visual object 1610 and provide a user input requesting the supply of power from the battery 189 to the electrical wires 810.

For example, the foldable electronic device 200 may cause heat generation in electronic components (e.g., the electronic components 510 of FIG. 5) of the foldable electronic device 200 in a state that the user is not using the foldable electronic device 200. When heat is generated from the electronic components, the heat may be transferred to the shape-memory film 360. The shape-memory film 360 may reduce a crease by providing tensile force to the display panel 340 based on the heat. The foldable electronic device 200 may be configured to select at least one electronic component causing heat generation among the electronic components, based on a region where a crease is generated, so that heat is provided to the region.

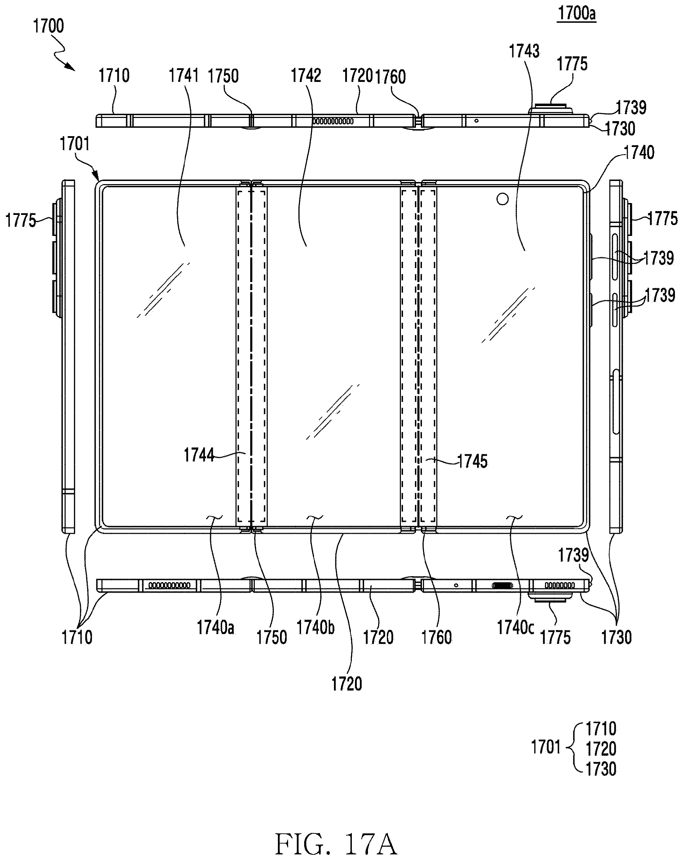

The foldable electronic device 200 described above has been described as including the foldable housing 201 including the first housing part 210 and the second housing part 220, but embodiments of the present disclosure are not limited thereto. As described below, a foldable electronic device (e.g., a foldable electronic device 1700 of FIG. 17A) according to an embodiment of the present disclosure may include a foldable housing including a first housing part (e.g., a first housing part 1710 of FIG. 17A), a second housing part (e.g., a second housing part 1720 of FIG. 17A), and a third housing part (e.g., a third housing part 1730 of FIG. 17A). The foldable electronic device 1700 described below may be referred to as a multi-foldable electronic device. The descriptions of the shape-memory film described above may be substantially equally applied to the foldable electronic device 1700 described below.

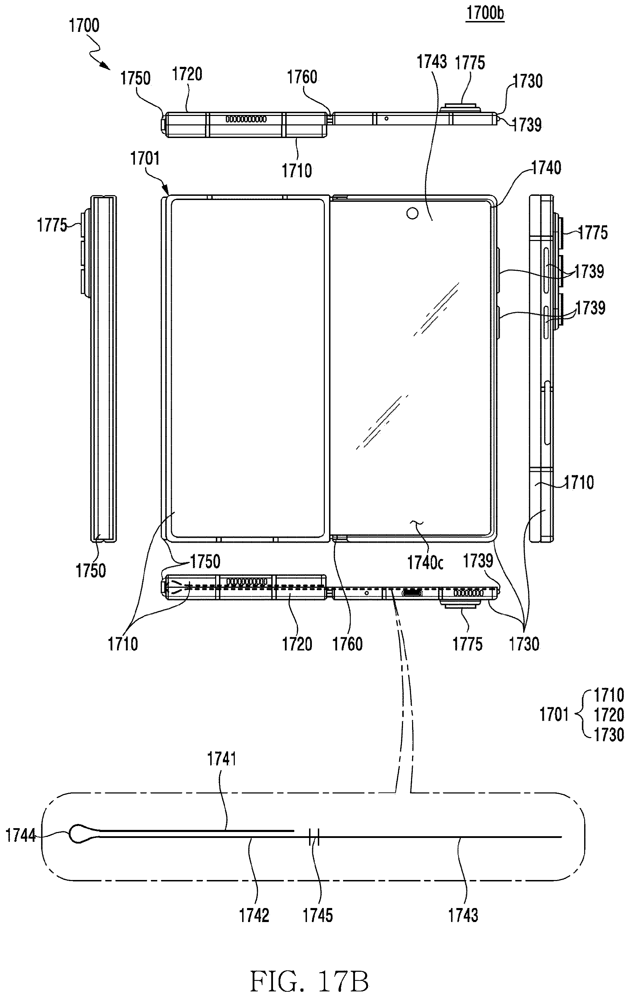

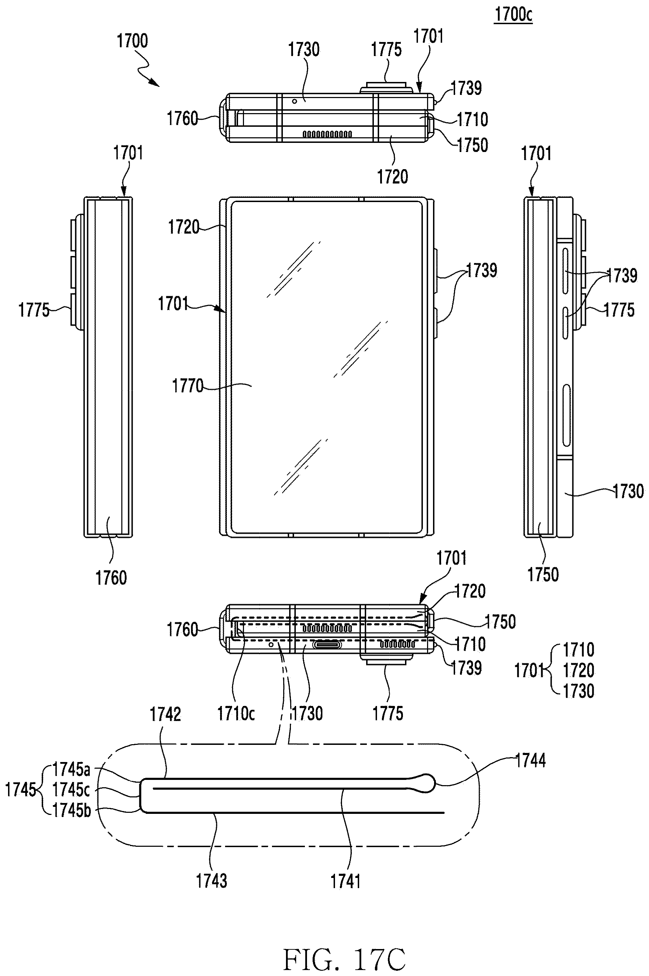

FIG. 17A illustrates an example of a first state of an electronic device. FIG. 17B illustrates an example of a second state of an electronic device. FIG. 17C illustrates an example of a third state of an electronic device.

Referring to FIGS. 17A, 17B, and 17C, a foldable electronic device 1700 may include a foldable housing 1701, a flexible display 1740, a first hinge assembly 1750, a second hinge assembly 1760, and a display 1770. The first foldable housing 1701 may include a first housing part 1710, a second housing part 1720, and a third housing part 1730.

The first housing part 1710 may be rotatably coupled to the second housing part 1720 by the first hinge assembly 1750. The second housing part 1720 and the first housing part 1710 may be rotated with respect to the first hinge assembly 1750. While the first housing part 1710 rotates with respect to the first hinge assembly 1750, the second housing part 1720 may rotate with respect to the first hinge assembly 1750. For example, when the second housing part 1720 and the first housing part 1710 are rotated with respect to the first hinge assembly 1750, an angular displacement of the second housing part 1720 may be substantially equal to an angular displacement of the first housing part 1710.

The third housing part 1730 may be rotatably coupled to the second housing part 1720 by the second hinge assembly 1760. The second housing part 1720 and the third housing part 1730 may be rotated with respect to the second hinge assembly 1760. While the second housing part 1720 is rotated with respect to the second hinge assembly 1760, the third housing part 1730 may be rotated with respect to the second hinge assembly 1760. For example, when the second housing part 1720 and the third housing part 1730 are rotated with respect to the second hinge assembly 1760, the angular displacement (or angular change) of the second housing part 1720 may be substantially equal to the angular displacement of the third housing part 1730.

The first hinge assembly 1750 and the second hinge assembly 1760 may change a state of the foldable electronic device 1700. The first hinge assembly 1750 and the second hinge assembly 1760 may provide (or enable) a first state 1700a of the foldable electronic device 1700 (or a first state 1700a of the foldable housing 1701). The first state 1700a of the foldable electronic device 1700 (or the first state 1700a of the foldable housing 1701) may be described as an unfolded state (or unfolding state) of the foldable electronic device 1700 (or the foldable housing 1701). In the first state 1700a, a front surface of the first housing part 1710, a front surface of the second housing part 1720, and a front surface of the third housing part 1730 may define a front surface of the foldable electronic device 1700. In the first state 1700a, the front surface of the first housing part 1710, the front surface of the second housing part 1720, and the front surface of the third housing part 1730 may face the same direction. In the first state 1700a, the foldable electronic device 1700 may provide a large display region of the flexible display 1740 to the user.

The first hinge assembly 1750 and the second hinge assembly 1760 may provide a second state 1700b of the foldable electronic device 1700. The second state 1700b of the foldable electronic device 1700 may be described as a state in which the foldable electronic device 1700 is partially folded and partially unfolded (or a single folding state or a half folding state). For example, in the second state 1700b, the front surface of the second housing part 1720 and the front surface of the third housing part 1730 may face the same direction, and the front surface of the first housing part 1710 and the front surface of the second housing part 1720 may face opposite directions. For example, in the second state 1700b, the first housing part 1710 and the second housing part 1720 may be folded, and the second housing part 1720 and the third housing part 1730 may be unfolded. In the second state 1700b, the foldable electronic device 1700 may provide visual information through a portion (e.g., a third display region 1740c) of the flexible display 1740.

The foldable electronic device 1700 may change from the first state 1700a to the third state 1700c through the second state 1700b. The foldable electronic device 1700 may change from the first state 1700a, which is an unfolded state, to the second state 1700b, which is a partially unfolded state. For example, the foldable electronic device 1700 may change from the first state 1700a in which the first housing part 1710, the second housing part 1720, and the third housing part 1730 face the same direction, to the second state 1700b in which the front surface of the first housing part 1710 faces the front surface of the second housing part 1720. The foldable electronic device 1700 may change from the second state 1700b, which is partially unfolded, to the third state 1700c, which is folded. For example, when changing from the second state 1700b to the third state 1700c, the folded first housing part 1710 and the second housing part 1720 may be disposed on the third housing part 1730.

The first hinge assembly 1750 and the second hinge assembly 1760 may provide a third state 1700c of the foldable electronic device 1700 (or a third state 1700c of the foldable housing 1701). The third state 1700c of the foldable electronic device 1700 (or the third state 1700c of the foldable housing 1701) may be described as a state in which the foldable electronic device 1700 (or the foldable housing 1701) is folded (or a folding state or a multi-folding state). In the third state 1700c, the front surface of the first housing part 1710 and the front surface of the second housing part 1720 may face opposite directions, and the front surface of the second housing part 1720 and the front surface of the third housing part 1730 may face opposite directions. In the third state 1700c, the front surface of the first housing part 1710 and the front surface of the third housing part 1730 may face the same direction. For example, in the third state 1700c, the front surface of the second housing part 1720 may face the front surface of the first housing part 1710, and the front surface of the third housing part 1730 may face a rear surface of the first housing part 1710. In the third state 1700c, a rear surface of the second housing part 1720 may be exposed to the outside. The display 1770 may be disposed on the rear surface of the second housing part 1720. In the third state 1700c, a rear surface of the third housing part 1730 may be exposed to the outside. A camera 1775 may be disposed on the rear surface of the third housing part 1730. In the third state 1700c, the foldable electronic device 1700 may be folded to enhance portability and may provide visual information through the display 1770 disposed on the rear surface of the second housing part 1720.

According to an embodiment, the foldable electronic device 1700 may further include a key button 1739. The key button 1739 may be exposed from a structure (e.g., opening) formed on a side surface of the third housing part 1730 and may partially protrude to the outside of the foldable electronic device 1700. The key button 1739 may provide a physical input to processing circuitry inside the foldable electronic device 1700 by a pressure transmitted from the outside. The key button 1739 may not be included in the foldable electronic device 1700 and may be implemented in another form, such as a soft key displayed on the flexible display 1740 or the display 1770.

According to an embodiment, the key button 1739 may be disposed on the side surface of the third housing part 1730 so as to be exposed to the outside in the third state 1700c. The key button 1739 may be disposed in a direction toward which the side surface of the third housing part 1730 faces by being disposed on the side surface of the third housing part 1730. Even when the third state 1700c is changed to the first state 1700a by a user looking at the display 1770, a position of the key button 1739 disposed on the side surface of the third housing part 1730 may not move. For example, referring to FIG. 17A, in the first state 1700a, when the flexible display 1740 is viewed from above, the key button 1739 may be disposed on the right. Referring to FIG. 17C, in the third state 1700c, when the display 1770 is viewed from above, the key button 1739 may be disposed on the right side.

According to an embodiment, the flexible display 1740 may at least partially define a surface of the foldable electronic device 1700. The flexible display 1740 may be partially disposed within the foldable housing 1701. The flexible display 1740 may define a front surface of the foldable electronic device 1700. The flexible display 1740 may include a first unbendable portion 1741, a second unbendable portion 1742, a third unbendable portion 1743, a first bendable portion 1744, and a second bendable portion 1745. The first unbendable portion 1741 of the flexible display 1740 may be disposed on the front surface of the first housing part 1710. The second unbendable portion 1742 of the flexible display 1740 may be disposed on the front surface of the second housing part 1720. The third unbendable portion 1743 of the flexible display 1740 may be disposed on the front surface of the third housing part 1730. The first bendable portion 1744 of the flexible display 1740 may be disposed between the first unbendable portion 1741 and the third unbendable portion 1743 of the flexible display 1740. For example, the first bendable portion 1744 of the flexible display 1740 may be disposed on the first hinge assembly 1750 connecting the first housing part 1710 and the second housing part 1720. The second bendable portion 1745 of the flexible display 1740 may be disposed between the second unbendable portion 1742 and the third unbendable portion 1743 of the flexible display 1740. For example, the second bendable portion 1745 of the flexible display 1740 may be disposed on the second hinge assembly 1760 connecting the second housing part 1720 and the third housing part 1730.

According to an embodiment, the first hinge assembly 1750 and the second hinge assembly 1760 may face substantially the same direction as the first unbendable portion 1741 of the flexible display 1740, the second unbendable portion 1742 of the flexible display 1740, and the third unbendable portion 1743 of the flexible display 1740. In the first state 1700a, the first bendable portion 1744 and the second bendable portion 1745 may be disposed in substantially the same horizontal plane as the first unbendable portion 1741, the second unbendable portion 1742, and the third unbendable portion 1743.

According to an embodiment, the first hinge assembly 1750 and the second hinge assembly 1760 may provide a second state 1700b of the foldable electronic device 1700. In the second state 1700b, the first unbendable portion 1741 of the flexible display 1740 may face the second unbendable portion 1742 of the flexible display 1740, and the third unbendable portion 1743 of the flexible display 1740 may face the same direction as the second unbendable portion 1742 of the flexible display 1740. For example, the second unbendable portion 1742 and the third unbendable portion 1743 may be disposed in substantially the same horizontal plane.

According to an embodiment, in the second state 1700b, as the first bendable portion 1744 of the flexible display 1740 is bent by the first hinge assembly 1750, the first bendable portion 1744 of the flexible display 1740 may be folded, so that the first unbendable portion 1741 of the flexible display 1740 and the second unbendable portion 1742 of the flexible display 1740 face different directions.

According to an embodiment, in the second state 1700b, as the second bendable portion 1745 of the flexible display 1740 is maintained in the unfolded state by the second hinge assembly 1760, the second bendable portion 1745 of the flexible display 1740 may be unfolded so that the second unbendable portion 1742 of the flexible display 1740 and the third unbendable portion 1743 of the flexible display 1740 face the same direction.

According to an embodiment, the first hinge assembly 1750 and the second hinge assembly 1760 may provide a third state 1700c of the foldable electronic device 1700. In the third state 1700c, the second unbendable portion 1742 of the flexible display 1740 may face the first unbendable portion 1741 of the flexible display 1740, and the third unbendable portion 1743 of the flexible display 1740 may face the rear surface of the first housing part 1710.

According to an embodiment, in the third state 1700c, as the first bendable portion 1744 of the flexible display 1740 is bent by the first hinge assembly 1750, the first bendable portion 1744 of the flexible display 1740 may be folded so that the first unbendable portion 1741 of the flexible display 1740 and the second unbendable portion 1742 of the flexible display 1740 face different directions.

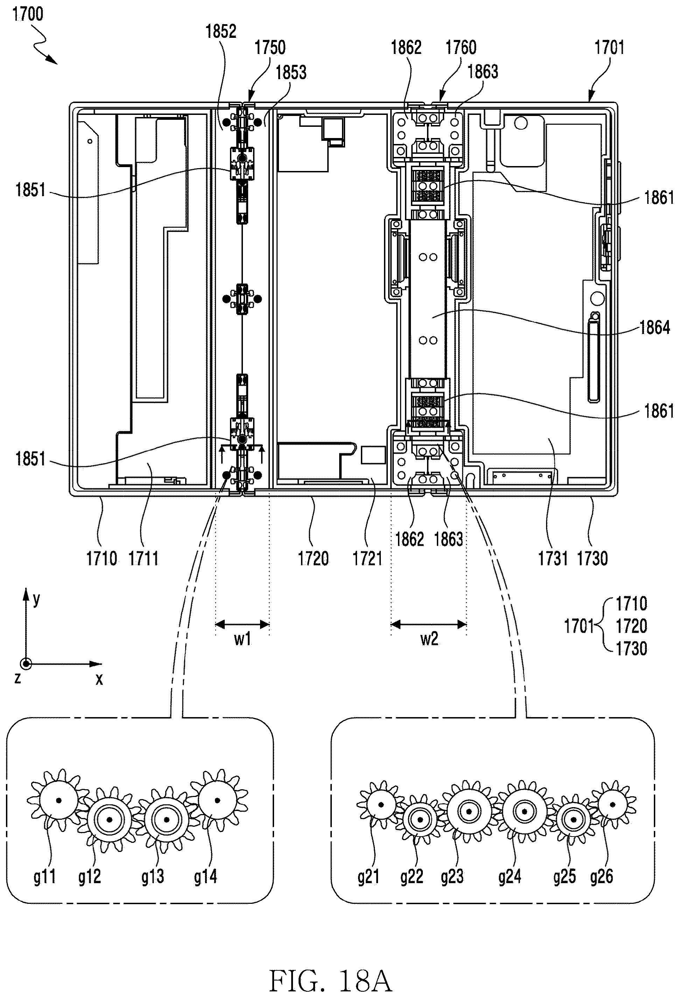

According to an embodiment, in the third state 1700c, the second bendable portion 1745 of the flexible display 1740 is bent by the second hinge assembly 1760, the second bendable portion 1745 of the flexible display 1740 may be folded so that the second unbendable portion 1742 of the flexible display 1740 and the third unbendable portion 1743 of the flexible display 1740 face different directions. The second bendable portion 1745 may further include a first deformation portion 1745a, a second deformation portion 1745b, and a planar portion 1745c. The first deformation portion 1745a may be disposed between the planar portion 1745c and the second unbendable portion 1742, and the second deformation portion 1745b may be disposed between the planar portion 1745c and the third unbendable portion 1743. The planar portion 1745c may be disposed between the first deformation portion 1745a and the second deformation portion 1745b. The planar portion 1745c may be supported by a support plate (e.g., the support plate 1864 of FIG. 18A) that is distinct from the hinge plates (e.g., the third hinge plate 1862 and the fourth hinge plate 1863 of FIG. 18A) of the second hinge assembly 1760. Regardless of the state of the foldable electronic device 1700, the planar portion 1745c may maintain a planar surface. The first deformation portion 1745a and the second deformation portion 1745b may be unfolded in the first state 1700a and the second state 1700b, and in the third state 1700c, the first deformation portion 1745a and the second deformation portion 1745b may be bent so that the second unbendable portion 1742 and the third unbendable portion 1743 face different directions. In the third state 1700c, the first housing part 1710 may be disposed between the second housing part 1720 and the third housing part 1730. In the third state 1700c, the second bendable portion 1745 of the flexible display 1740 disposed on the second hinge assembly 1760 may partially face the side surface 1710c of the first housing part 1710.

A display region of the flexible display 1740 may include a first display region 1740a, a second display region 1740b, and a third display region 1740c. The display region indicates a region capable of providing visual information from the flexible display 1740. In the first state 1700a, the entire display region of the flexible display 1740 may be viewed from the front surface of the foldable housing 1701. For example, in the first state 1700a, the first display region 1740a, the second display region 1740b, and the third display region 1740c of the flexible display 1740 may be visually exposed. The foldable electronic device 1700 may provide, to the user, a large display region including the first display region 1740a, the second display region 1740b, and the third display region 1740c.

In the second state 1700b, the display region of the flexible display 1740 may be partially visible from the front surface of the third housing part 1730. For example, the third display region 1740c may be visually exposed, and the first display region 1740a and the second display region 1740b may not be visually exposed.

In the third state 1700c, the display region of the flexible display 1740 may not be visible. For example, in the third state 1700c, the first display region 1740a, the second display region 1740b, and the third display region 1740c of the flexible display 1740 may not be visually exposed.

As a non-limiting example, when the flexible display 1740 is used to display a screen within the first state 1700a of the foldable electronic device 1700, the first display region 1740a, the second display region 1740b, and the third display region 1740c of the flexible display 1740 may be activated. As a non-limiting example, in the third state 1700c, the first display region 1740a, the second display region 1740b, and the third display region 1740c of the flexible display 1740 may be deactivated. As a non-limiting example, in the second state 1700b of the foldable electronic device 1700, when the flexible display 1740 is used to display a screen, the third display region 1740c may be activated, and the first display region 1740a and the second display region 1740b of the flexible display 1740 may be deactivated.

As a non-limiting example, when the flexible display 1740 is used to display a screen within the first state 1700a of the foldable electronic device 1700, the first display region 1740a, the second display region 1740b, and the third display region 1740c of the flexible display 1740 may display visual information. As a non-limiting example, in the third state 1700c, the first display region 1740a, the second display region 1740b, and the third display region 1740c of the flexible display 1740 may provide a black image. As a non-limiting example, in the second state 1700b of the foldable electronic device 1700, when the flexible display 1740 is used to display a screen, the third display region 1740c may provide visual information, and the first display region 1740a and the second display region 1740b of the flexible display 1740 may provide a black image.

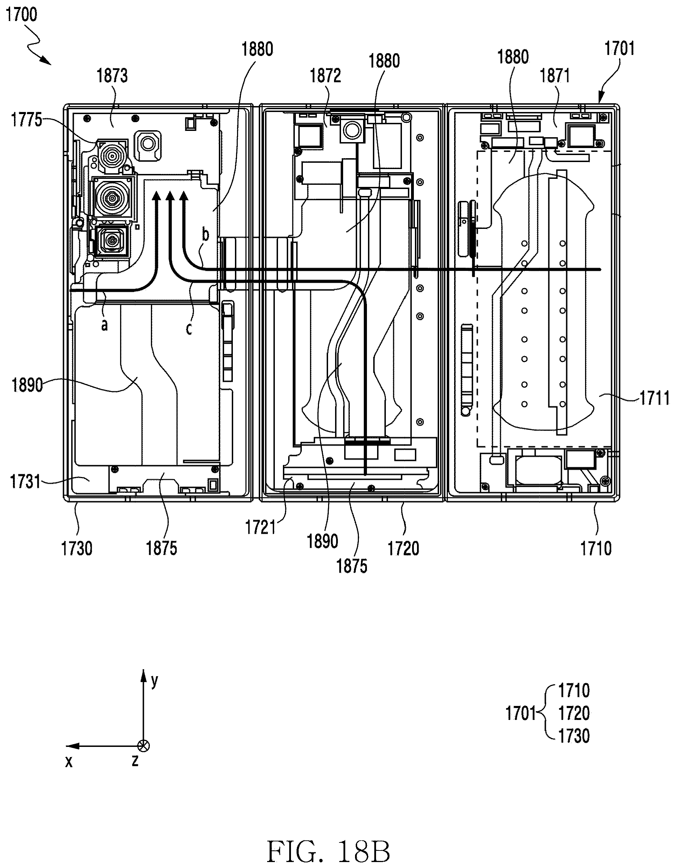

FIG. 18A is a plan view of an electronic device from which a flexible display is removed. FIG. 18B is a rear view of an electronic device from which a rear cover and a display are removed.

Referring to FIGS. 18A and 18B, the foldable electronic device 1700 may include a first hinge assembly 1750 and a second hinge assembly 1760. A first width w1 of the first hinge assembly 1750 may be narrower than a second width w2 of the second hinge assembly 1760. A difference between the first width w1 of the first hinge assembly 1750 and the second width w2 of the second hinge assembly 1760 may be greater than or equal to a thickness of the first housing part 1710. For example, the second hinge assembly 1760 may have the second width w2 wider than the first width w1 so that the first housing part 1710 is disposed between the second housing part 1720 and the third housing part 1730 according to the third state 1700c. The first hinge assembly 1750 may be referred to as a narrow hinge assembly in terms of having a narrower width than the second hinge assembly 1760. The second hinge assembly 1760 may be referred to as a wide hinge assembly in terms of having a wider width than the first hinge assembly 1750.

According to an embodiment, the first hinge assembly 1750 may include a first set of gears 1851, a first hinge plate 1852, and a second hinge plate 1853. The first hinge plate 1852 may be coupled to a first support portion 1711 of the first housing part 1710. The second hinge plate 1853 may be coupled to a second support portion 1721 of the second housing part 1720. Gears g11, g12, g13, and g14 included in the first set of gears 1851 may be configured to rotate the first hinge plate 1852 and the second hinge plate 1853. For example, the gears g11, g12, g13, and g14 included in the first set of gears 1851 may rotate the second hinge plate 1853 (or the second housing part 1720) by linking with a rotation of the first hinge plate 1852 (or the first housing part 1710). After the first hinge plate 1852 (or the first housing part 1710) rotates, the gears g11, g12, g13, and g14 included in the first set of gears 1851 may rotate in accordance with a rotation of the first hinge plate 1852 (or the first housing part 1710). The second hinge plate 1853 (or the second housing part 1720) may rotate by linking with the rotation of the first hinge plate 1852 in accordance with the rotation of the gears included in the first set of gears 1851. For example, the gears g11, g12, g13, and g14 included in the first set of gears 1851 may include a first gear g11, a second gear g12, a third gear g13, and a fourth gear g14. The first gear g11 may be disposed adjacent to the first hinge plate 1852, and the fourth gear g14 may be disposed adjacent to the second hinge plate 1853. The second gear g12 and the third gear g13 may be disposed between the first gear g11 and the fourth gear g14. The first gear g11, the second gear g12, the third gear g13, and the fourth gear g14 may be sequentially engaged. According to a rotation of the first gear g11 in a first rotation direction (e.g., clockwise), the second gear g12 engaged with the first gear g11 may be rotated in a second rotation direction (e.g., counterclockwise) opposite to the first rotation direction. According to the rotation of the second gear g2 in the second rotation direction, the third gear g13 engaged with the second gear g12 may be rotated in the first rotation direction. The fourth gear g14 may be rotated in the second rotation direction according to the rotation of the third gear g13 in the first rotation direction. As the first gear g11 and the fourth gear g14 rotate in different directions, the first housing part 1710 connected to the first hinge plate 1852 and the second housing part 1720 connected to the second hinge plate 1853 may be folded or unfolded.

According to an embodiment, the second hinge assembly 1760 may include a second set of gears 1861, a third hinge plate 1862, a fourth hinge plate 1863, and a support plate 1864. The third hinge plate 1862 may be coupled to the second support portion 1721 of the second housing part 1720. The fourth hinge plate 1863 may be coupled to a third support portion 1731 of the third housing part 1730. Gears g21, g22, g23, g24, g25, and g26 included in the second set of gears 1861 may be configured to rotate the third hinge plate 1862 and the fourth hinge plate 1863. For example, the gears g21, g22, g23, g24, g25, and g26 included in the second set of gears 1861 may rotate the fourth hinge plate 1863 (or the third housing part 1730) by linking with a rotation of the third hinge plate 1862 (or the second housing part 1720). After the third hinge plate 1862 (or the second housing part 1720) is rotated, the gears g21, g22, g23, g24, g25, and g26 included in the second set of gears 1861 may rotate according to the rotation of the third hinge plate 1862 (or the second housing part 1720). The fourth hinge plate 1863 (or the third housing part 1730) may be rotated by linking with the rotation of the third hinge plate 1862 according to the rotation of the gears g21, g22, g23, g24, g25, and g26 included in the second set of gears 1861.

According to an embodiment, the gears g21, g22, g23, g24, g25, and g26 included in the second set of gears 1861 may include a first gear g21, a second gear g22, a third gear g23, a fourth gear g24, a fifth gear g25, and a sixth gear g26. The first gear g21 may be disposed adjacent to the third hinge plate 1862, and the sixth gear g26 may be disposed adjacent to the fourth hinge plate 1863. The second gear g22, the third gear g23, the fourth gear g24, and the fifth gear g25 may be disposed between the first gear g21 and the sixth gear g26. The first gear g21, the second gear g22, the third gear g23, the fourth gear g24, the fifth gear g25, and the sixth gear g26 may be sequentially engaged. According to a rotation of a first rotation direction (e.g., clockwise) of the first gear g21, the second gear g22 engaged with the first gear g21 may be rotated in a second rotation direction (e.g., counterclockwise) opposite to the first rotation direction. According to the rotation of the second gear g22 in the second rotation direction, the third gear g23 engaged with the second gear g22 may be rotated in the first rotation direction. According to the rotation of the third gear g23 in the first rotation direction, the fourth gear g24 may be rotated in the second rotation direction. According to the rotation of the fourth gear g24 in the second rotation direction, the fifth gear g25 engaged with the fourth gear g24 may be rotated in the first rotation direction. According to the rotation of the fifth gear g25 in the first rotation direction, the sixth gear g26 engaged with the fifth gear g25 may be rotated in the second rotation direction. As the first gear g21 and the sixth gear g26 rotate in different directions, the second housing part 1720 connected to the third hinge plate 1862 and the third housing part 1730 connected to the fourth hinge plate 1863 may be folded or unfolded.

According to an embodiment, the first hinge assembly 1750 and the second hinge assembly 1760 may further include a spiral structure. The spiral structure may include a helical spiral groove formed in each hinge plate or a rotation member connected to the hinge plate and a moving member sliding along the spiral groove. The hinge plates connected to the hinge assembly may be configured to rotate at substantially the same angular displacement through the spiral structure.

According to an embodiment, the foldable electronic device 1700 may include a first printed circuit board 1871, a second printed circuit board 1872, and a third printed circuit board 1873.

According to an embodiment, the first printed circuit board 1871 may be disposed on the first support portion 1711 of the first housing part 1710. Hardware components within the first housing part 1710 may be disposed in the first printed circuit board 1871. The second printed circuit board 1872 may be disposed on the second support portion 1721 of the second housing part 1720. The third printed circuit board 1873 may be disposed in the third support portion 1731 of the third housing part 1730. Hardware components within the third housing part 1730 may be disposed in the third printed circuit board 1873.

According to an embodiment, hardware components disposed on the first printed circuit board 1871 may support or operate independently of hardware components disposed on the second printed circuit board 1872 and/or hardware components disposed on the third printed circuit board 1873.

According to an embodiment, the hardware components disposed on the second printed circuit board 1872 may support or operate independently of the hardware components disposed on the first printed circuit board 1871 or the third printed circuit board 1873. The hardware components disposed on the second printed circuit board 1872 may include a speaker, a front camera, and/or display driving circuitry.

According to an embodiment, the hardware components disposed on the third printed circuit board 1873 may include at least one processor (e.g., an application processor (AP), a communication processor (CP)) including processing circuitry, memory including one or more storage media, communication circuitry, and a rear camera 1775. The rear camera 1775 may be exposed through a structure (e.g., opening) of the rear surface of the third housing part 1730.

According to an embodiment, the foldable electronic device 1700 may further include a sub-printed circuit board 1875, flexible printed circuit boards 1880 and 1890. The sub-printed circuit board 1875 may be disposed on at least a portion of the first housing part 1710, the second housing part 1720, and the third housing part 1730. The flexible printed circuit boards 1880 and 1890 may include a first flexible printed circuit board 1880 and a second flexible printed circuit board 1890. The first flexible printed circuit board 1880 may electrically connect printed circuit boards disposed on each of the housing parts 1710, 1720, and 1730. The second flexible printed circuit board 1890 may connect a printed circuit board within a housing part in which the sub-printed circuit board 1875 is disposed and the sub-printed circuit board 1875.

According to an embodiment, components within the foldable electronic device 1700 may be connected to at least one processor within the third printed circuit board 1873 through the flexible printed circuit boards 1880 and 1890. For example, a signal received from an antenna disposed in the third housing part 1730 may be transmitted to the third printed circuit board 1873 on which at least one processor (e.g., AP or CP) is disposed through a signal path (a) provided by the first flexible printed circuit board 1880. A driving circuit for the flexible display 1740 disposed within the first housing part 1710 may be connected to the third printed circuit board 1873 on which at least one processor (e.g., AP) is disposed through a signal path (b) provided by the sub-printed circuit board 1875 and the first flexible printed circuit board 1880. A driving circuit for the display 1770 connected to the sub-printed circuit board 1875 disposed on the second housing part 1720 may be electrically connected to the third printed circuit board 1873 on which at least one processor (e.g., AP) is disposed through a signal path (c) provided by the sub-printed circuit board 1875 and the first flexible printed circuit board 1880 and the second flexible printed circuit board 1890.

According to an embodiment, the foldable electronic device 1700 may further include batteries. For example, each of the batteries may be attached to support portions 1711, 1721, and 1731 included in the housing parts 1710, 1720, and 1730. The support portions 1711, 1721, and 1731 may support rechargeable batteries.

The arrangement of hardware components is exemplary, unlike the above description, the rear camera 1775 and the second printed circuit board 1872 may be disposed in the third housing part 1730, and the third printed circuit board 1873 may be disposed in the second housing part 1720.

It is illustrated that the first housing part 1710 and the third housing part 1730 rotate in opposite directions with respect to the second housing part 1720, but are not limited thereto. For example, while changing from the first state 1700a to the third state 1700c, the first housing part 1710 may rotate counterclockwise with respect to the second housing part 1720, and the third housing part 1730 may rotate counterclockwise with respect to the second housing part 1720. As the first housing part 1710 and the third housing part 1730 rotate in the same direction, a portion of the display region of the flexible display 1740 within the second state may be visually exposed.

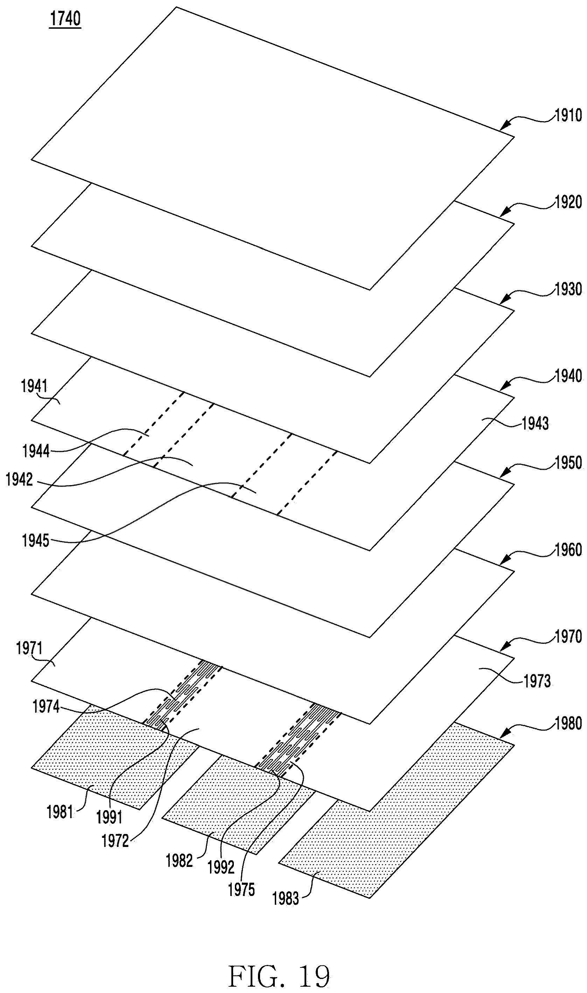

FIG. 19 is an exploded perspective view of a flexible display of a foldable electronic device according to an embodiment.

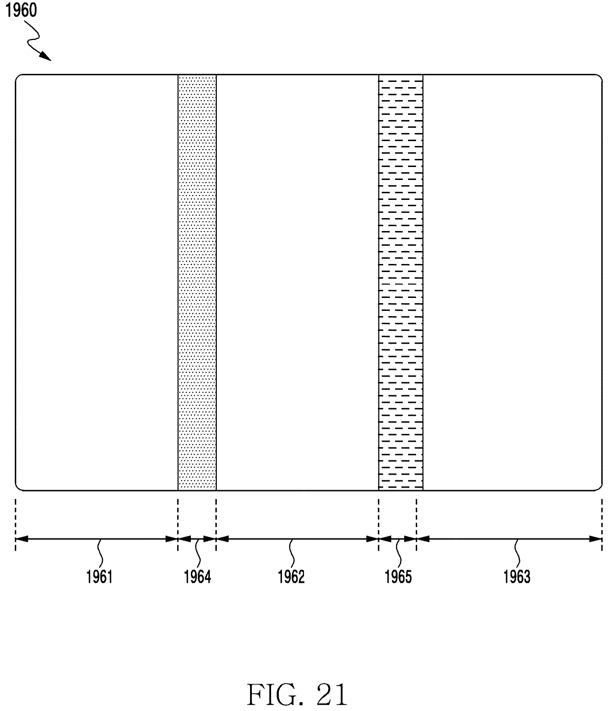

A foldable electronic device (e.g., the foldable electronic device 1700 of FIG. 17A) may be substantially the same as the foldable electronic device 200 described with reference to FIGS. 2A to 18B, except that it includes a first housing part (e.g., the first housing part 1710 of FIG. 17A), a second housing part (e.g., the second housing part 1720 of FIG. 17A), and a third housing part (e.g., the third housing part 1730 of FIG. 17A). A plurality of layers of the flexible display 1740 illustrated in FIG. 21 may correspond to the plurality of layers of the flexible display 230 illustrated in FIG. 3, respectively. Hereinafter, a difference due to the addition of the third housing part is described, and overlapping descriptions may be omitted or briefly described.

Referring to FIG. 19, a flexible display 1740 may include a first protective film 1910, a protective layer 1920, a transparent cover 1930, a display panel 1940, a second protective film 1950, a shape-memory film 1960, a first support plate 1970, and/or a second support plate 1980.

According to an embodiment, a display panel 1940 may include a first portion 1941, a second portion 1942, a third portion 1943, a fourth portion 1944, and a fifth portion 1945. The first portion 1941 of the display panel 1940 may be supported by the first housing part 1710. The second portion 1942 of the display panel 1940 may be supported by the second housing part 1720. The third portion 1943 of the display panel 1940 may be supported by the third housing part 1730. The fourth portion 1944 of the display panel 1940 may be disposed between the first portion 1941 of the display panel 1940 and the second portion 1942 of the display panel 1940 and may be folded or unfolded by a first hinge assembly (e.g., the first hinge assembly 1750 of FIG. 17A). For example, the fourth portion 1944 of the display panel 1940 may be configured to be bent by a rotation of the first housing part 1710 and/or a rotation of the second housing part 1720. The fifth portion 1945 of the display panel 1940 may be disposed between the second portion 1942 of the display panel 1940 and the third portion 1943 of the display panel 1940 and may be folded or unfolded by a second hinge assembly (e.g., the second hinge assembly 1760 of FIG. 17A). For example, the fifth portion 1945 of the display panel 1940 may be configured to be bent by a rotation of the second housing part 1720 and/or a rotation of the third housing part 1730. A width of the fourth portion 1944 of the display panel 1940 may be narrower than a width of the fifth portion 1945 of the display panel 1940.

According to an embodiment, the first support plate 1970 may include a first support portion 1971, a second support portion 1972, a third support portion 1973, a first bendable portion 1974, and a second bendable portion 1975. The first support portion 1971 may correspond to the first portion 1941 of the display panel 1940. The first support portion 1971 may support the first portion 1941 of the display panel 1940. The second support portion 1972 may correspond to the second portion 1942 of the display panel 1940. The second support portion 1972 may support the second portion 1942 of the display panel 1940. The third support portion 1973 may correspond to the third portion 1943 of the display panel 1940. The third support portion 1973 may support the third portion 1943 of the display panel 1940. The first support portion 1971, the second support portion 1972, and the third support portion 1973 may be relatively rigid. The first bendable portion 1974 may correspond to the fourth portion 1944 of the display panel 1940. The second bendable portion 1975 may correspond to the fifth portion 1945 of the display panel 1940.

According to an embodiment, the first bendable portion 1974 of the first support plate 1970 may include a plurality of first holes 1991, and the second bendable portion 1975 of the first support plate 1970 may include a plurality of second holes 1992. The plurality of first holes 1991 may enable the first bendable portion 1974 to be bent better according to the bending of the fourth portion 1944 of the display panel 1940. The plurality of second holes 1992 may enable the second bendable portion 1975 to be bent better according to the bending of the fifth portion 1945 of the display panel 1940. Since a width of the fourth portion 1944 of the display panel 1940 and a width of the fifth portion 1945 of the display panel 1940 are different, a width of the first bendable portion 1974 of the first support plate 1970 and a width of the second bendable portion 1975 of the first support plate 1970 may be different. For example, the width of the first bendable portion 1974 may be narrower than the width of the second bendable portion 1975.

According to an embodiment, the flexible display 1740 may include the second support plate 1980. The second support plate 1980 may support the display panel 1940 together with the first support plate 1970. The second support plate 1980 may include a first part 1981, a second part 1982, and a third part 1983 that are spaced apart from each other. The first part 1981 may correspond to the first portion 1941 of the display panel 1940. The second part 1982 may correspond to the second portion 1942 of the display panel 1940. The third part 1983 may correspond to the third portion 1943 of the display panel 1940.

According to an embodiment, the flexible display 1740 may include a shape-memory film 1960 formed from a shape-memory material. The shape-memory film 1960 may be disposed between the display panel 1940 and the first support plate 1970. For example, the shape-memory film 1960 may be disposed within the second protective film 1950. The shape-memory film 1960 may be configured to have a restored shape in response to a glass transition temperature. The restored shape of the shape-memory film 1960 may be a flat shape. When the shape-memory film 1960 has the restored shape, tensile force may be provided to the display panel 1940. The tensile force may reduce a crease formed in the display panel 1940.

The above-described descriptions may be substantially equally applied to the first support plate 1970 of FIG. 19. According to an embodiment, the first support plate 1970 may include a conductive portion for providing heat to the shape-memory film 1960. The conductive portion may be implemented as the examples described above. For example, the conductive portion may include a conductive portion material (e.g., the first conductive portion 610 of FIG. 6) formed from a thermally conductive, electrical wires (e.g., the electrical wires 810 of FIG. 9) each including a resistor (e.g., the resistor 910 of FIG. 9), and/or signal lines (e.g., the signal lines 1010 of FIG. 11). The first conductive portion 610 formed from a thermally conductive material, the electrical wires 810, and/or the signal lines 1010 may be included in the first bendable portion 1974 of the first support plate 1970 and the second bendable portion 1975 of the first support plate 1970. The conductive portion may transfer heat to the shape-memory film 1960.

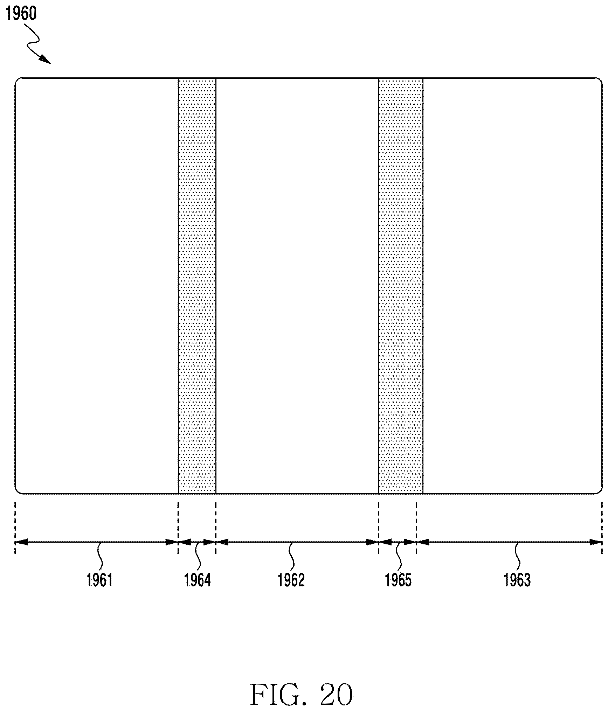

FIGS. 20, 21, 22, and 23 illustrate examples of a shape-memory film.

Referring to FIG. 20, the shape-memory film 1960 may be partially formed from a shape-memory material. For example, a foldable electronic device (e.g., the foldable electronic device 1700 of FIG. 17A) may be folded twice through a first hinge assembly (e.g., the first hinge assembly 1750 of FIG. 17A) and a second hinge assembly 1960. Since a fourth portion 1944 and a fifth portion 1945 of a display panel 1940 of the flexible display 1740 may be folded or unfolded, a crease may be mainly formed within the fourth portion 1944 of the display panel 1940 and the fifth portion 1945 of the display panel 1940.

According to an embodiment, the shape-memory film 1960 may have a shape corresponding to a shape of the display panel 1940. For example, the shape-memory film 1960 may include a first portion 1961, a second portion 1962, a third portion 1963, a fourth portion 1964, and a fifth portion 1965. The first portion 1961 of the shape-memory film 1960 may correspond to the first portion 1941 of the display panel 1940. For example, the first portion 1961 of the shape-memory film 1960 may be positioned between the first portion 1941 of the display panel 1940 and the first support portion 1971 of the first support plate 1970. The second portion 1962 of the shape-memory film 1960 may correspond to the second portion 1942 of the display panel 1940. For example, the second portion 1962 of the shape-memory film 1960 may be positioned between the second portion 1942 of the display panel 1940 and the second support portion 1972 of the first support plate 1970. The third portion 1963 of the shape-memory film 1960 may correspond to the third portion 1943 of the display panel 1940. For example, the third portion 1963 of the shape-memory film 1960 may be positioned between the third portion 1943 of the display panel 1940 and the third support portion 1973 of the first support plate 1970. The fourth portion 1964 of the shape-memory film 1960 may correspond to the fourth portion 1944 of the display panel 1940. For example, the fourth portion 1964 of the shape-memory film 1960 may be positioned between the fourth portion 1944 of the display panel 1940 and the first bendable portion 1974 of the first support plate 1970. The fourth portion 1964 of the shape-memory film 1960 may extend from the first portion 1961 of the shape-memory film 1960 to the second portion 1962 of the shape-memory film 1960. The fifth portion 1965 of the shape-memory film 1960 may correspond to the fifth portion 1945 of the display panel 1940. For example, the fifth portion 1965 of the shape-memory film 1960 may be positioned between the fifth portion 1945 of the display panel 1940 and the second bendable portion 1975 of the first support plate 1970. The fifth portion 1965 of the shape-memory film 1960 may extend from the second portion 1962 of the shape-memory film 1960 to the third portion 1963 of the shape-memory film 1960.

According to an embodiment, in order to reduce a crease formed within the fourth portion 1944 of the display panel 1940 and the fifth portion 1945 of the display panel 1940, the fourth portion 1964 and the fifth portion 1965 of the shape-memory film 1960 may be formed from a shape-memory material. The first portion 1961 of the shape-memory film 1960 corresponding to the first portion 1941 of the display panel 1940, the second portion 1962 of the shape-memory film 1960 corresponding to the second portion 1942 of the display panel 1940, and the third portion 1963 of the shape-memory film 1960 corresponding to the third portion 1943 of the display panel 1940 may be formed from a relatively rigid material.

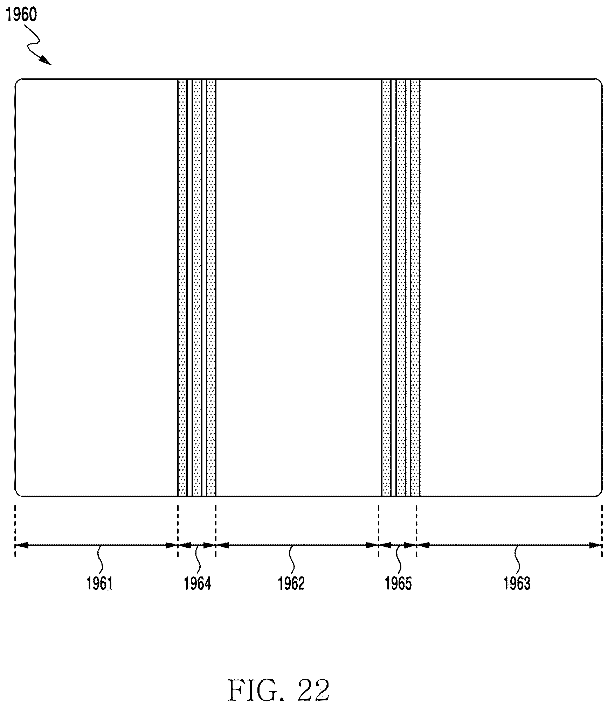

In the example illustrated in FIG. 22, a shape-memory material forming the fourth portion 1964 of the shape-memory film 1960 and a shape-memory material forming the fifth portion 1965 of the shape-memory film 1960 may be the same.

Referring to FIG. 21, a shape-memory material forming the fourth portion 1964 of the shape-memory film 1960 may be different from a shape-memory material forming the fifth portion 1965 of the shape-memory film 1960. As described above, in the third state that the foldable electronic device 1700 is fully folded, a width (e.g., the first width w1 of FIG. 18A) of a first hinge assembly (e.g., the first hinge assembly 1750 of FIG. 17A) and a width (e.g., the second width w2 of FIG. 18A) of a second hinge assembly (e.g., the second hinge assembly 1960 of FIG. 17A) may be different so that one housing part may be positioned between two housing parts. For example, the first width w1 may be narrower than the second width w2. As described above, the width of the fourth portion 1944 of the display panel 1940 may be narrower than the width of the fifth portion 1945 of the display panel 1940.

The fourth portion 1944 of the display panel 1940 and the fifth portion 1945 of the display panel 1940 may be configured to be bent by a folding movement of the foldable electronic device 200. Since the width of the fourth portion 1944 of the display panel 1940 is different from the width of the fifth portion 1945, the width of the fourth portion 1964 of the shape-memory film 1960 may be different from the width of the fifth portion 1965 of the shape-memory film 1960. For example, the width of the fourth portion 1964 of the shape-memory film 1960 may be narrower than the width of the fifth portion 1965 of the shape-memory film 1960. Since the width of the fourth portion 1964 of the shape-memory film 1960 is narrower than the width of the fifth portion 1965 of the shape-memory film 1960, the shape-memory material included in the fourth portion 1964 may be less than the shape-memory material included in the fifth portion 1965.

According to an embodiment, in a folded state of the foldable electronic device 1700 (e.g., the third state 1700C of FIG. 17C), a structure of the fourth portion 1944 of the display panel 1940 may be different from a structure of the fifth portion 1945 of the display panel 1940. For example, a curvature of the fourth portion 1944 of the display panel 1940 that is folded in a relatively narrow region may be greater than a curvature of the fifth portion 1945 of the display panel 1940 that is folded in a relatively wide region. Since the curvature of the fourth portion 1944 is greater than the curvature of the fifth portion 1945, a crease of the fourth portion 1944 may be formed more easily than a crease of the fifth portion 1945.

According to an embodiment, a shape-memory material (e.g., the first shape-memory material) forming the fourth portion 1964 of the shape-memory film 1960 may be different from a shape-memory material (e.g., the second shape-memory material) forming the fifth portion 1965 of the shape-memory film 1960. A degree to which the first shape-memory material is restored at a glass transition temperature may be different from a degree to which the second shape-memory material is restored at the glass transition temperature. For example, the fourth portion 1964 of the shape-memory film 1960 corresponding to the fourth portion 1944 of the display panel 1940 in which a crease may be more easily formed may include a first shape-memory material having a first characteristic capable of providing relatively strong tensile force. The fifth portion 1965 of the shape-memory film 1960 corresponding to the fifth portion 1945 of the display panel 1940 in which a crease are not easily formed may include a second shape-memory material having a second characteristic capable of providing relatively weak tensile force.

For example, among electronic components included in the foldable electronic device 1700, the electronic components disposed within a first housing part (e.g., the first housing part 1710 of FIG. 17A) may be configured to emit relatively much heat. For example, an application processor (e.g., the processor 120 of FIG. 1), a power integrated circuit, or a camera, which are disposed within the first housing part 1710, may generate relatively much heat. Since the fourth portion 1964 of the shape-memory film 1960 is adjacent to the first housing part 1710, heat from the electronic components disposed within the first housing part 1710 may be easily transferred. Since the fifth portion 1965 of the shape-memory film 1960 is relatively far from the first housing part 1710, it may be difficult that heat from the electronic components disposed within the first housing part 1710 is transferred. According to an embodiment, since the fourth portion 1964 of the shape-memory film 1960 whose temperature is relatively easily increased may easily have a restored shape even when it is formed from a material having a relatively high glass transition temperature, the first shape-memory material forming the fourth portion 1964 may have a relatively high glass transition temperature. The fifth portion 1965 of the shape-memory film 1960 whose temperature is relatively difficultly increased may be formed from a second shape-memory material having a relatively low glass transition temperature.

Referring to FIG. 22, the shape-memory material within the fourth portion 1964 of the shape-memory film 1960 and/or the shape-memory material within the fifth portion 1965 of the shape-memory film 1960 may be disposed to form a specific pattern. For example, the fourth portion 1964 and the fifth portion 1965 may not be entirely formed from the shape-memory material, but the shape-memory material may be disposed to form a specific pattern (e.g., a stripe). According to an embodiment, the shape-memory material forming the specific pattern may be provided in plurality. For example, two or more shape-memory materials having different characteristics may form a specific pattern within the fourth portion 1964 and the fifth portion 1965. The two or more shape-memory materials may be disposed alternately or mixed.

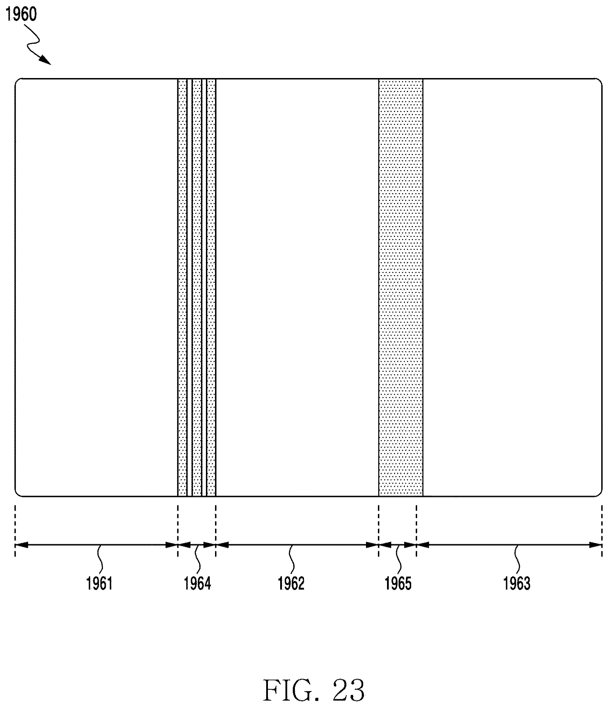

Referring to FIG. 23, the shape-memory material included in any one of the fourth portion 1964 of the shape-memory film 1960 and the fifth portion 1965 of the shape-memory film 1960 may form a specific pattern. For example, the shape-memory material forming the fourth portion 1964 of the shape-memory film 1960 may be disposed to form a specific pattern (e.g., a stripe). The shape-memory material forming the fifth portion 1965 of the shape-memory film 1960 may entirely form the fifth portion 1965.

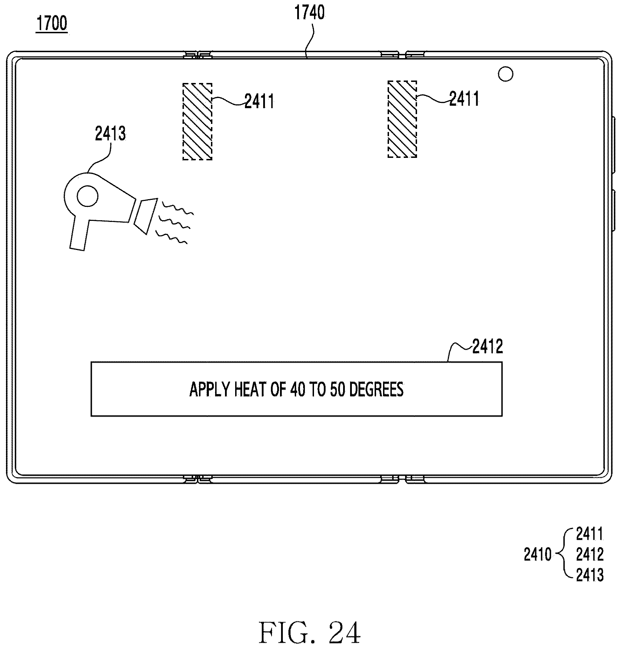

FIG. 24 illustrates a visual object provided by a foldable electronic device according to an embodiment.

Referring to FIG. 24, the foldable electronic device 1700 according to an embodiment may identify a crease formed on the display panel 1940. The foldable electronic device 1700 may be configured to display, through the flexible display 1740, a visual object 2410 indicating a request to apply heat to reduce a crease based on identifying the crease.

Unlike the foldable electronic device 200 illustrated in FIG. 16, the foldable electronic device 1700 illustrated in FIG. 24 has the flexible display 1740 that may be folded in two regions. Since a fourth portion (e.g., the fourth portion 1944 of FIG. 19) of a display panel (e.g., the display panel 1940 of FIG. 19) and a fifth portion (e.g., the fifth portion 1945 of FIG. 19) of the display panel 1940 may be folded or unfolded, a crease may be relatively easily formed in the fourth portion 1944 of the display panel 1940 and the fifth portion 1945 of the display panel 1940.

According to an embodiment, the foldable electronic device 1700 may include an AI model trained to identify a crease. For example, at least one processor (e.g., the processor 120 of FIG. 1) may analyze data, such as the number of times the foldable electronic device 1700 has been folded or unfolded, or a time during which a folded state of the foldable electronic device 200 is maintained, by using the AI model.

For example, the at least one processor 120 may analyze the data related to the fourth portion 1944 of the display panel 1940 and the data related to the fifth portion 1945 of the display panel 1940, respectively. The at least one processor 120 may be configured to calculate, using the AI model, a first probability that the crease of the fourth portion 1944 will be formed and a second probability that the crease of the fifth portion 1945 will be formed, respectively. When the calculated first probability and/or second probability exceeds a threshold value, the at least one processor 120 may be configured to display a visual object 2410 on a screen displayed through the flexible display 1740. A threshold value related to the first probability may be different from a threshold value related to the second probability. For example, since the crease of the fourth portion 1944 of the display panel 1940 that is folded or unfolded in a relatively narrow range is formed more easily than the crease of the fifth portion 1945 of the display panel 1940 that is folded or unfolded in a relatively wide range, the threshold value related to the first probability may be set lower than the threshold value related to the second probability. For example, the visual object 2410 may include a first visual object 2411 indicating a region of the display panel 1940 where a crease is generated, a second visual object 2412 including text requesting provision of heat, and/or a third visual object 2413 including an icon requesting provision of heat but is not limited thereto. For example, when the first probability exceeds the threshold value, the at least one processor 120 may be configured to display text including a phrase to provide heat to a region corresponding to the fourth portion 1944 of the display panel 1940.

For example, a user may recognize the generation of the crease through the visual object 2410 displayed through the flexible display 1740 and apply heat. For example, the user may apply heat using a separate heat source, or may also apply heat through a user input requesting execution of a function of the foldable electronic device 1700 related to the application of heat. For example, when the foldable electronic device 1700 includes the electrical wires 810 of FIG. 9, the user may recognize the generation of the crease through the visual object 2410 and provide a user input requesting the supply of power from the battery 189 to the electrical wires 810.

For example, the foldable electronic device 1700 may cause heat generation in electronic components of the foldable electronic device 1700 in a state that the user is not using the foldable electronic device 1700. When heat is generated from the electronic components, the heat may be transferred to a shape-memory film (e.g., the shape-memory film 1960 of FIG. 19). The shape-memory film 1960 may reduce the crease by providing tensile force to the display panel 1940 based on the heat. The foldable electronic device 1700 may be configured to select at least one electronic component causing heat generation, based on a region where the crease is generated among the electronic components, so that heat is provided to the region.

A shape of a foldable electronic device (e.g., a multi-foldable electronic device) including three housing parts may be different from the shape illustrated in FIGS. 17A to 18B. For example, in a foldable electronic device according to an embodiment of the present disclosure, a rotation direction of the first housing part and a rotation direction of the third housing part may be configured to rotate in the same direction (e.g., counterclockwise). For example, the first housing part may be configured to rotate counterclockwise with respect to the second housing part, and the third housing part may be configured to rotate counterclockwise with respect to the second housing part. In this case, a first unbendable portion (e.g., the first unbendable portion 1741 of FIG. 17A) may be folded outward with respect to a second unbendable portion (e.g., the second unbendable portion 1742 of FIG. 17A), and a third unbendable portion (e.g., the third unbendable portion 1743 of FIG. 17A) may be folded inward with respect to the second unbendable portion. When viewed from the side, the foldable electronic device may be folded in a Z-shaped.

The technical problems to be achieved in this document are not limited to those described above, and other technical problems not mentioned herein will be clearly understood by those having ordinary knowledge in the art to which the present disclosure belongs, from the following description.

A foldable electronic device is disclosed. The foldable electronic device may include a foldable housing including a first housing part and a second housing part rotatably coupled to the first housing part. The foldable electronic device may include a flexible display. The flexible display may include a display panel including a transparent cover, a support plate, including a bendable portion that includes a plurality of holes and a conductive portion, supporting the display panel, and a film, formed from a shape-memory material and disposed between the display panel and the support plate. The film may be configured to restore based on a temperature of the film reaching a glass transition temperature. The film may be provided heat via the conductive material of the support plate to reach the glass transition temperature.

The glass transition temperature is a temperature at which the film transitions from a first state to a second state, the first state being harder than the second state. The film is in the first state below the glass transition temperature, and enters into the second state when it is heated to the glass transition temperature. The first state may be a relatively solid, or glassy state. The second state may be a relatively liquid, or viscous state. The film may be capable of greater deformation without fracturing in the second state than is possible in the first state.

The film may be arranged to return to an original shape when heated to the glass transition temperature. The original shape may be a shape of the film during or immediately after it was manufactured. The original shape may substantially flat.

A foldable electronic device is disclosed. The foldable electronic device may include a housing including: a first housing part; and a second housing part moveably coupled to the first housing part. The foldable electronic device may further include a flexible display, disposed on a front side of the first housing part and the second housing part, the flexible display including: a display panel; a support plate, supporting the display panel, including a bendable portion and a conductive portion formed from a thermally conductive material. The foldable electronic device may further include a film, disposed between the display panel and the support plate, formed from a shape-memory material that has a glass transition temperature. The conductive portion of the support plate may be configured to conduct heat to the film from at least one other component of the foldable electronic device.

The conductive portion of the support plate may be configured to conduct heat to the film from a vapor chamber.

The bendable portion may comprise a plurality of holes.

The shape memory material may be configured to restore based on a temperature of the film reaching the glass transition temperature. The film may be arranged to return to an original shape when heated to the glass transition temperature. The original shape may be a shape of the film during or immediately after it was manufactured. The original shape may substantially flat.

A method of operating a foldable electronic device is disclosed. The method includes providing a foldable electronic device. The foldable electronic device may include a foldable housing including a first housing part and a second housing part rotatably coupled to the first housing part. The foldable electronic device may include a flexible display. The flexible display may include a display panel including a transparent cover, a support plate, including a bendable portion that includes a plurality of holes and a conductive portion, supporting the display panel, and a film, formed from a shape-memory material and disposed between the display panel and the support plate. The film may be configured to restore based on a temperature of the film reaching a glass transition temperature. method further includes operating the device so that the film is provided heat via the conductive material of the support plate to reach the glass transition temperature.

A method of operating a foldable electronic device is disclosed. The method includes providing a foldable electronic device. The foldable electronic device may include a housing including: a first housing part; and a second housing part moveably coupled to the first housing part. The foldable electronic device may further include a flexible display, disposed on a front side of the first housing part and the second housing part, the flexible display including: a display panel; a support plate, supporting the display panel, including a bendable portion and a conductive portion formed from a thermally conductive material. The foldable electronic device may further include a film, disposed between the display panel and the support plate, formed from a shape-memory material that has a glass transition temperature. Wherein the conductive portion of the support plate is configured to conduct heat to the film from at least one other component of the foldable electronic device. The method further includes operating the device so that heat is generated by the at least one other component, that heat being conducted to the film by the conductive portion so that the film reaches the glass transition temperature.

The conductive portion of the support plate may be configured to conduct heat to the film from a vapor chamber.

The bendable portion may comprise a plurality of holes.

The shape memory material may be configured to restore based on a temperature of the film reaching the glass transition temperature. The film may be arranged to return to an original shape when heated to the glass transition temperature. The original shape may be a shape of the film during or immediately after it was manufactured. The original shape may substantially flat.

A foldable electronic device 101, 200, or 1700 is disclosed. The foldable electronic device 101, 200, or 1700 may include a foldable housing 201 including a first housing part 210 and a second housing part 220 rotatably coupled to the first housing part 210. The foldable electronic device 101, 200, or 1700 may include a flexible display 230. The flexible display 230 may include a display panel 340 including a transparent cover 330, a support plate 370, including a bendable portion 373 that includes a plurality of holes 390 and a conductive portion 610, supporting the display panel 340, and a film 360, formed from a shape-memory material and disposed between the display panel 340 and the support plate 370. The film 360 may be configured to provide tensile force in a direction of unfolding the display panel 340 to reduce a crease of the display panel 340 by a shape of the film 360 being restored based on a temperature of the film 360 reaching a glass transition temperature. The film 360 may be provided heat through the conductive portion 610 to reach the glass transition temperature.

The display panel 340 may include a first portion 341, a second portion 342, and a third portion 343, disposed between the first portion 341 of the display panel 340 and the second portion 342 of the display panel 340 and configured to be bent within a folded state of the foldable electronic device 101, 200, or 1700. The support plate 370 may further include a first support portion 371 corresponding to the first portion 341 of the display panel 340, and a second support portion 372 corresponding to the second portion 342 of the display panel 340. The bendable portion 373 of the support plate 370, disposed between the first support portion 371 of the support plate 370 and the second support portion 372 of the support plate 370, may correspond to the third portion 343 of the display panel 340.

The conductive portion 610 of the bendable portion 373 may correspond to the first conductive portion 610. The first support portion 371 of the support plate 370 may include a second conductive portion 620 connected to a side of the first conductive portion 610 of the bendable portion 373. The second support portion 372 of the support plate 370 may include a third conductive portion 610 connected to another side of the first conductive portion 610 within the bendable portion 373. The foldable electronic device 101, 200, or 1700 may further include electronic components 510 disposed in the foldable housing 201. The conductive portion 610 of the bendable portion 373, formed from a thermally conductive material, may be configured to transfer heat generated by at least one of the electronic components 510 to the film 360.

The foldable electronic device 101, 200, or 1700 may further include a battery 189 electrically connected to the conductive portion 610 of the bendable portion 373. The conductive portion 610 of the bendable portion 373 may include electrical wires 810 respectively including a resistor 910 configured to generate heat according to power provided from the battery 189.

The foldable electronic device 101, 200, or 1700 may further include at least one processor 120 including processing circuitry. The foldable electronic device 101, 200, or 1700 may further include memory 130 including one or more storage media storing instructions. The instructions, when executed by the at least one processor 120 individually or collectively, may cause the foldable electronic device 101, 200, or 1700 to provide power from the battery 189 to the electrical wires 810 including the resistor 910, based on identifying that the battery 189 is charging.

The foldable electronic device 101, 200, or 1700 may further include a first printed circuit board 261 disposed in the first housing part 210. The foldable electronic device 101, 200, or 1700 may further include a second printed circuit board 262 disposed in the second housing part 220. The conductive portion 610 of the bendable portion 373 may include signal lines 1010 configured to electrically connect the first printed circuit board 261 and the second printed circuit board 262.

The foldable electronic device 101, 200, or 1700 may further include a hinge assembly 250 including hinge plates rotatably connecting the first housing part 210 and the second housing part 220. The foldable electronic device 101, 200, or 1700 may further include electronic components 510 disposed in the foldable housing 201. The foldable electronic device 101, 200, or 1700 may further include a vapor chamber 1310 configured to spread heat generated by at least one of the electronic components 510. The vapor chamber 1310 may be disposed adjacent to the hinge assembly 250 to transfer the heat to the conductive portion 610 of the bendable portion 373.

The foldable electronic device 101, 200, or 1700 may further include a hinge assembly 250 including hinge plates that rotatably connect the first housing part 210 and the second housing part 220. The foldable electronic device 101, 200, or 1700 may further include electronic components 510 disposed within the foldable housing 201. The hinge plates may be formed from a thermally conductive material to transfer heat generated from at least one of the electronic components 510 to the conductive portion 610 of the bendable portion 373.

The film 360 may include a silver-nano coating layer.

The flexible display 230 may further include a first adhesive layer 411 attached to the front surface of the support plate 370 and formed from the shape-memory material.

The flexible display 230 may further include a second adhesive layer 412 attached to the rear surface of the support plate 370 and formed from the shape-memory material.

The foldable electronic device 101, 200, or 1700 may further include a battery 189 electrically connected to the conductive portion 610 of the bendable portion 373. The foldable electronic device 101, 200, or 1700 may further include a first printed circuit board 261 disposed in the first housing part 210. The foldable electronic device 101, 200, or 1700 may further include a second printed circuit board 262 disposed in the second housing part 220. The conductive portion 610 of the bendable portion 373 may include electrical wires 810 respectively including a resistor 910 configured to generate heat according to power provided from the battery 189, and signal lines 1010 configured to electrically connect the first printed circuit board 261 and the second printed circuit board 262. The electrical wires 810 and the signal lines 1010 may be disposed on a layer of the support plate 370.

The foldable electronic device 101, 200, or 1700 may further include a battery 189 electrically connected to the conductive portion 610 of the bendable portion 373. The foldable electronic device 101, 200, or 1700 may further include a first printed circuit board 261 disposed in the first housing part 210. The foldable electronic device 101, 200, or 1700 may further include a second printed circuit board 262 disposed in the second housing part 220. The conductive portion 610 of the bendable portion 373 may include electrical wires 810 respectively including a resistor 910 configured to generate heat according to power provided from the battery 189, and signal lines 1010 configured to electrically connect the first printed circuit board 261 and the second printed circuit board 262. The electrical wires 810 may be disposed on a first layer of the support plate 370. The signal lines 1010 may be disposed on a second layer of the support plate 370 different from the first layer of the support plate 370.

A flexible display module 230 or 1740 is disclosed. The flexible display module 230 or 1740 may include a display panel 340 including a transparent cover 330. The flexible display module 230 or 1740 may include a support plate 370, including a bendable portion 373 that includes a plurality of holes 390 and a conductive portion 610, supporting at least a portion of the display panel 340. The flexible display module 230 or 1740 may include a shape-memory film 360 formed from a shape-memory material and disposed between the display panel 340 and the support plate 370. The shape-memory film 360 may be configured to provide tensile force in a direction of unfolding the display panel 340 to reduce a crease of the display panel 340 by a shape of the shape-memory film 360 being restored based on a temperature of the shape-memory film 360 reaching a glass transition temperature. The shape-memory film 360 may provide heat through the conductive portion 610 to reach the glass transition temperature.

A thickness of the shape-memory film 360 may be thicker a the thickness of the above transparent cover 330.

The flexible display module 230 or 1740 may further include a protective layer 320 disposed on the display panel 340. A thickness of the protective layer 320 may be thicker than the thickness of the shape-memory film 360.

The thickness of the shape-memory film 360 may be thinner than a thickness of the above support plate 370.

A modulus value of the shape-memory film 360 may be smaller than a modulus value of the display panel 340.

The flexible display module 230 or 1740 may include another shape-memory film disposed between the display panel 340 and the support plate 370. A first characteristic of the shape-memory film 360, which includes elasticity or modulus value, may be different from a second characteristic of the other shape-memory film.

An electronic device 101, 200, or 1700 is disclosed. The electronic device 101, 200, or 1700 may include a housing 201 including a first housing part 210 and a second housing part 220 movably coupled to the first housing part 210. The electronic device 101, 200, or 1700 may include a flexible display 230 disposed on a front side of the first housing part 210 and the second housing part 220. The flexible display 230 may include a display panel 340 including flat regions 341 and 342 and a bendable region 343. The flexible display 230 may include a support plate 370, including a bendable portion 373 that includes a plurality of holes 390 and a conductive portion 610 formed from a thermally conductive material. The flexible display 230 may include a film 360 disposed between the display panel 340 and the support plate 370. The film 360 may be formed from a shape-memory material that is restored based on a temperature of the film 360 reaching a glass transition temperature. The film may be provided heat through the thermally conductive material of the support plate to reach the glass transition temperature.

The flat area of the display panel 340 may include a first portion 341 and a second portion 342. The bendable portion of the display panel 340 may include a third portion 343, disposed between the first portion 341 of the display panel 340 and the second portion 342 of the display panel 340, configured to be bent in a folded state of the electronic device 101, 200, or 1700. The support plate 370 may further include a first support portion 371 corresponding to the first portion 341 of the display panel 340, and a second support portion 372 corresponding to the second portion 342 of the display panel 340. The bendable portion 373 of the support plate 370, disposed between the first support portion 371 of the support plate 370 and the second support portion 372 of the support plate 370, may correspond to the third portion 343 of the display panel 340.

The conductive portion 610 of the bendable portion 373 may correspond to the first conductive portion 610. The first support portion 371 of the support plate 370 may include a second conductive portion 610 connected to a side of the first conductive portion 610 of the bendable portion 373. The second support portion 372 of the support plate 370 may include a third conductive portion 610 connected to another side of the first conductive portion 610 of the bendable portion 373.

The electronic device 101, 200, or 1700 may further include electronic components 510 disposed in the housing 201. The conductive portion 610 of the bendable portion 373, formed from a thermally conductive material, may be configured to transfer heat generated by at least one of the electronic components 510 to the film 360.

The electronic device 101, 200, or 1700 may further include a battery 189 electrically connected to the conductive portion 610 of the bendable portion 373. The conductive portion 610 of the bendable portion 373 may include electrical wires 810 respectively including a resistor 910 configured to generate heat according to power provided from the battery 189.

The electronic device 101, 200, or 1700 may further include at least one processor 120 including processing circuitry. The electronic device 101, 200, or 1700 may further include memory 130 including one or more storage media storing instructions. The instructions, when executed by the at least one processor 120 individually or collectively, may cause the electronic device 101, 200, or 1700 to provide power from the battery 189 to the electrical wires 810 including the resistor 910 based on identifying that the battery 189 is charging.

The electronic device 101, 200, or 1700 may further include a first printed circuit board 261 disposed in the first housing part 210 and a second printed circuit board 262 disposed in the second housing part 220. The conductive portion 610 of the bendable portion 373 may include signal lines 1010 configured to electrically connect the first printed circuit board 261 and the second printed circuit board 262.

The electronic device 101, 200, or 1700 may further include a hinge assembly 250 including hinge plates rotatably connecting the first housing part 210 and the second housing part 220, electronic components 510 disposed in the housing 201, and a vapor chamber 1310 configured to spread heat generated by at least one of the electronic components 510. The vapor chamber 1310 may be disposed adjacent to the hinge assembly 250 to transfer the heat to the conductive portion 610 of the bendable portion 373.

The electronic device 101, 200, or 1700 may further include a hinge assembly 250 including hinge plates rotatably connecting the first housing part 210 and the second housing part 220, and electronic components 510 disposed in the housing 201. The hinge plates may be formed from a thermally conductive material to transfer heat generated from at least one of the electronic components 510 to the conductive portion 610 of the bendable portion 373.

The film 360 may include a silver-nano coating layer.

The flexible display 230 may further include a first adhesive layer 411, attached to a front surface of the support plate 370, formed from the shape-memory material.

The flexible display 230 may further include a second adhesive layer 412, attached to a rear surface of the support plate 370, formed from the shape-memory material.

The electronic device 101, 200, or 1700 may further include a battery 189 electrically connected to the conductive portion 610 of the bendable portion 373, a first printed circuit board 261 disposed in the first housing part 210, and a second printed circuit board 262 disposed in the second housing part 220. The conductive portion 610 of the bendable portion 373 may include electrical wires 810 respectively including a resistor 910 configured to generate heat according to power provided from the battery 189, and signal lines 1010 configured to electrically connect the first printed circuit board 261 and the second printed circuit board 262. The electrical wires 810 and the signal lines 1010 may be disposed on a layer of the support plate 370.

The electronic device 101, 200, or 1700 may further include a battery 189 electrically connected to the conductive portion 610 of the bendable portion 373, a first printed circuit board 261 disposed in the first housing part 210, and a second printed circuit board 262 disposed in the second housing part 220. The conductive portion 610 of the bendable portion 373 may include electrical wires 810 respectively including a resistor 910 configured to generate heat according to power provided from the battery 189, and signal lines 1010 configured to electrically connect the first printed circuit board 261 and the second printed circuit board 262. The electrical wires 810 may be disposed on a first layer of the support plate 370. The signal lines 1010 may be disposed on a second layer of the support plate 370 different from the first layer of the support plate 370.

The film 360 may be configured to provide tensile force in a direction of unfolding the display panel 340 to reduce a crease of the display panel 340.

A flexible display module is disclosed. The flexible display module may include a display panel including a transparent cover. The flexible display module may include a substrate, including a bendable portion and a rigid portion, supporting at least a portion of the display panel. The bendable portion may include a plurality of holes. The flexible display module may include a shape-memory film disposed between the display panel and the substrate.

The transparent cover may include a glass layer. A thickness of the shape-memory film may be thicker than a thickness of the glass layer.

The flexible display module may further include a protective layer disposed on the display panel. A thickness of the protective layer may be thicker than a thickness of the shape-memory film.

The thickness of the shape-memory film may be thinner than a thickness of the substrate.

A modulus value of the shape-memory film may be smaller than a modulus value of the display panel.

The modulus value of the shape-memory film may be greater than 0.45 GPa and less than 1.4 GPa.

The flexible display module may further include another shape-memory film disposed between the display panel and the substrate.

A first characteristic of the shape-memory film may be different from the other shape-memory film. The first characteristic may include elasticity or a modulus value.

The effects that can be obtained from the present disclosure are not limited to those described above, and any other effects not mentioned herein will be clearly understood by those having ordinary knowledge in the art to which the present disclosure belongs, from the following description.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

It will be appreciated that all of the above-described embodiments, and their technical features, may be combined with one another in each and every combination, potentially unless there is a conflict between two embodiments or features. That is, each and every combination of two or more of the above-described embodiments is envisaged and included within the present disclosure. One or more features from any embodiment may be incorporated in any other embodiment, and provide a corresponding advantage or advantages.

## Claims

1. A foldable electronic device comprising:
a housing including:
a first housing part, and
a second housing part moveably coupled to the first housing part; and
a flexible display, disposed on a front side of the first housing part and the second housing part, the flexible display including:
a display panel,
a support plate, supporting the display panel, including a bendable portion, the bendable portion including a plurality of holes and a conductive portion formed from a thermally conductive material,
a film, disposed between the display panel and the support plate, formed from a shape-memory material that is configured to restore based on a temperature of the film reaching a glass transition temperature,
wherein the film is provided heat via the thermally conductive material of the support plate to reach the glass transition temperature.

2. The foldable electronic device of claim 1,
wherein the display panel includes:
a first portion,
a second portion, and
a third portion, disposed between the first portion of the display panel and the second portion of the display panel, configured to be bent in a folded state of the foldable electronic device,
wherein the support plate includes:
a first support portion corresponding to the first portion of the display panel, and
a second support portion corresponding to the second portion of the display panel, and
wherein the bendable portion of the support plate, disposed between the first support portion of the support plate and the second support portion of the support plate, corresponds to the third portion of the display panel.

3. The foldable electronic device of claim 2,
wherein the conductive portion of the bendable portion corresponds to a first conductive portion,
wherein the first support portion of the support plate includes a second conductive portion connected to a side of the first conductive portion of the bendable portion, and
wherein the second support portion of the support plate includes a third conductive portion connected to another side of the first conductive portion of the bendable portion.

4. The foldable electronic device of any one of claims 1 to 3, further comprising electronic components disposed in the housing,
wherein the conductive portion of the support plate, formed from a thermally conductive material, is configured to transfer heat, generated by at least one of the electronic components, to the film.

5. The foldable electronic device of any one of claims 1 to 4, further comprising a battery electrically connected to the conductive portion of the bendable portion,
wherein the conductive portion of the bendable portion includes electrical wires respectively comprising a resistor configured to generate heat according to power provided from the battery.

6. The foldable electronic device of claim 5, further comprising:
at least one processor including processing circuitry; and
memory including one or more storage mediums storing instructions,
wherein the instructions, when executed by the at least one processor individually or collectively, cause the foldable electronic device to provide the power from the battery to the electrical wires comprising the resistor, based on identifying that the battery is charging.

7. The foldable electronic device of any one of claims 1 to 6, further comprising:
a first printed circuit board (PCB) disposed in the first housing part; and
a second PCB disposed in the second housing part,
wherein the conductive portion of the bendable portion includes signal lines configured to electrically connecting the first PCB and the second PCB.

8. The foldable electronic device of any one of claims 1 to 7, further comprising:
a hinge assembly including hinge plates rotatably connecting the first housing part and the second housing part;
electronic components disposed in the housing; and
a vapor chamber configured to spread heat generated by at least one of the electronic components,
wherein the vapor chamber is disposed adjacent to the hinge assembly, to transfer the heat generated by at least one of the electronic components to the conductive portion of the bendable portion.

9. The foldable electronic device of any one of claims 1 to 7, further comprising a hinge assembly including hinge plates rotatably connecting the first housing part and the second housing part; and
electronic components disposed in the housing,
wherein the hinge plates of the hinge assembly are formed from a thermally conductive material, to transfer heat generated by at least one of the electronic components to the conductive portion of the bendable portion.

10. The foldable electronic device of any one of claims 1 to 9,
wherein the film includes a silver - nano coating layer.

11. The foldable electronic device of any one of claims 1 to 10,
wherein the flexible display includes a first adhesive layer, attached on a front surface of the support plate, formed from the shape-memory material.

12. The foldable electronic device of any one of claims 1 to 11,
wherein the flexible display includes a second adhesive layer, attached on a rear surface of the support plate, formed from the shape-memory material.

13. The foldable electronic device of any one of claims 1 to 12, further comprising:
a battery electrically connected to the conductive portion of the bendable portion;
a first PCB disposed in the first housing part; and
a second PCB disposed in the second housing part,
wherein the conductive portion of the bendable portion includes:
electrical wires respectively comprising a resistor configured to generate heat according to power provided from the battery, and
signal lines configured to electrically connecting the first PCB and the second PCB, and
wherein the electrical wires and the signal lines are disposed on a layer of the support plate.

14. The foldable electronic device of any one of claims 1 to 12, further comprising:
a battery electrically connected to the conductive portion of the bendable portion;
a first PCB disposed in the first housing part; and
a second PCB disposed in the second housing part,
wherein the conductive portion of the bendable portion includes:
electrical wires respectively comprising a resistor configured to generate heat according to power provided from the battery, and
signal lines configured to electrically connecting the first PCB and the second PCB, and
wherein the electrical wires are disposed on a first layer of the support plate, and
wherein the signal lines are disposed on a second layer of the support plate different from a first layer of the support plate.

15. The foldable electronic device of any one of claims 1 to 14,
wherein the film is configured to provide tensile force in a direction of unfolding the display panel to reduce a crease of the display panel.
